# EUROPÄISCHE PATENTANMELDUNG

(11) **EP 1 206 112 A1**
(43) Veröffentlichungstag der Anmeldung: **15.05.2002**
(21) Anmeldenummer: 00123478.0
(22) Anmeldetag: 07.11.2000
(51) Int. Cl.: H04N 1/00, H04N 1/08

(54) **Fotografische Aufzeichnungsvorrichtung mit automatischer Beladung und Entladung eines Mediumbandes**

(71) Anmelder: GRETAG IMAGING Trading AG, 5430 Wettingen (CH)
(72) Erfinder: Landolt, Markus, 8057 Zürich (CH)
(74) Vertreter: Schwabe - Sandmair - Marx

(57) **Zusammenfassung**

Die Erfindung betrifft eine fotografische Aufzeichnungsvorrichtung zum Aufzeichnen fotografischer Bilder auf einem Mediumband, mit einer Mediumquelle (K), die ein Mediumband abgibt, mit einer Spannanordnung (100), die eine Spannstrecke vorgibt, an deren Streckenanfang ein von der Mediumquelle abgegebenes Mediumband zuführbar ist, entlang der ein Mediumband führbar und spannbar ist, und an deren Streckenende ein geführtes Mediumband durch einen ersten Haltemechanismus zum Spannen festgehalten werden kann, mit mindestens einem Aufzeichnungsapparat (1200), um die Bilder auf einem gespannten Mediumband aufzuzeichnen, und weiter umfassend: einen zweiten Haltemechanismus (210,220), der ein Mediumband festhalten kann und relativ zu dem die Spannanordnung bewegbar ist, einen Transportmechanismus (330), der ausgebildet ist, um ein Mediumband zwischen dem ersten und zweiten Haltemechanismus zu tranportieren, wenn der erste Haltemechanismus durch Bewegung der Spannanordnung relativ zum zweiten Haltemechanismus eine erste vorgegebene Stellung bezüglich dem zweiten Haltemechanismus einnimmt, und eine Steuerung (300,310,320,150,400), die zu einem Übergeben des Mediumbandes derartig ausgebildet ist, dass sie einen der beiden Haltemechanismen betätigt, um ein gehaltenes Mediumband freizugeben, und, in der ersten vorgegebenen Stellung, den Transportmechanismus betätigt, um das freigegebene Mediumband zu dem anderen der beiden Haltemechanismen zu transportieren.

## Beschreibung

Die vorliegende Erfindung betrifft eine fotografische Aufzeichnungsvorrichtung zum Aufzeichnen fotografischer Bilder auf einem Medium, insbesondere auf einem Mediumband, nach dem Oberbegriff des Anspruches 1. Die Erfindung betrifft insbesondere Trommelaufzeichnungsvorrichtungen, bei denen ein Mediumband über eine Trommel aufgespannt wird, um die fotografischen Bilder auf dem Mediumband aufzuzeichnen.

Eine derartige Trommelaufzeichnungsvorrichtung ist aus EP 1 009 158 A1 bekannt.

Die aus EP 1 009 158 A1 bekannte Aufzeichnungsvorrichtung ist in Fig. 18 gezeigt. Die Aufzeichnungsvorrichtung umfasst als Spannanordnung eine Spanntrommel 1100, als ersten Haltemechanismus ein Befestigungsmittel 1160 zu Befestigen eines Aufzeichnungsmediums M auf dem Mantel 1110 der Spanntrommel und eine bezüglich der Drehrichtung der Spanntrommel feststehende Aufzeichnungseinheit 1200. Die Aufzeichnungseinheit 1200 zeichnet Bildinformation, die ihr in Form von elektrischen Signalen zugeführt wird, auf das Aufzeichnungsmedium auf, das auf dem Mantel der rotierenden Spanntrommel 1100 befestigt ist. Im Inneren der Spanntrommel 1100 sind Halterungsmittel 1120 für eine als Mediumquelle dienende Rolle 1130 vorgesehen, auf der ein Vorrat an Aufzeichnungsmedium M aufgewickelt ist. Die Spanntrommel 1100 weist in ihrem Mantel 1110 eine Unterbrechung der Spannstrecke auf, die als Schlitz 1140 ausgebildet ist, durch den das Aufzeichnungsmedium M vom Inneren der Spanntrommel 1100 auf deren Mantel 1110 geführt und dort befestigt werden kann.

Die Befestigungsmittel sind als Klemmeinrichtung 1160 ausgebildet, die zwei beidseits des Mantels 1110 angelenkte Tragschenkel 1161 und 1162 und einen diese verbindenden Klemmbalken 1163 umfasst. Der Klemmbalken erstreckt sich quer über die Breite der Spannstrecke bzw. der Spanntrommel 1100. Ebenfalls an den beiden Tragschenkeln 1161 und 1162 ist ein Messerbalken 1170 befestigt, der quer über den Mantel 1110 sich erstreckt und als Schneideinrichtung dient. Dieser ist mit dem Klemmbalken 1163 zusammen bewegbar. Der Klemmbalken 1163 wird von nicht gezeigten Federn gegen die Oberfläche des Mantels 1110 gepresst und klemmt so das unter ihm befindliche Aufzeichnungsmedium M auf dem Mantel 1110 der Spanntrommel 1100 fest.

Gegenüberliegend der Aufzeichnungseinheit 1200 ist ortsfest in einem nicht gezeigten Rahmen eine Betätigungseinrichtung 1180 vorgesehen. Diese wird von der Steuerung 1300 gesteuert und betätigt die Klemmeinrichtung 1160 und die Schneideinrichtung 1170, wenn sich die Spanntrommel 1100 in einer definierten Drehstellung befindet, in welcher die Betätigungseinrichtung 1180 der Klemmeinrichtung 1160 gegenüber liegt und mit dieser in Eingriff gebracht werden kann. An derselben Stelle ist ebenfalls ortsfest in einem nicht gezeigten Rahmen eine Antriebseinrichtung 1190 vorgesehen, welche in der genannten Drehstellung der Spanntrommel 1100 gesteuert von der Steuerung 1300 in Eingriff mit dem auf dem Mantel 1110 befindlichen Aufzeichnungsmedium M gebracht werden kann und dazu dient, das Aufzeichnungsmedium M in Drehrichtung der Spanntrommel 1100 relativ zu dem Mantel 1110 vorzuschieben.

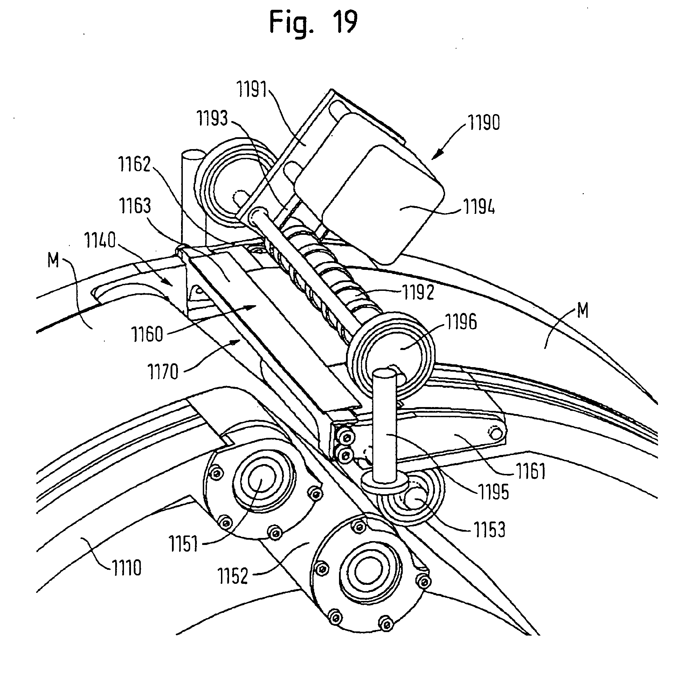

Wie die Detaildarstellung der Fig. 19 zeigt, umfasst die Antriebseinrichtung 1190 im Wesentlichen eine in einem Schwenkrahmen 1191 drehbar gelagerte Antriebswalze 1192, welche über einen Riemen 1193 von einem mit der Steuerung 1300 verbundenen Motor 1194 angetrieben ist. Der Schwenkrahmen 1191 ist in einem nicht dargestellten Rahmen ortsfest gelagert und kann über einen nur symbolisch angedeuteten Exzentermechanismus 1195-1196 auf den Mantel 1110 zu bewegt bzw. von diesem wegbewegt werden, wobei die Antriebswalze 1192 mit dem auf dem Mantel liegenden Aufzeichnungsmedium M in Eingriff kommt bzw. von diesem abgehoben wird. Mittels desselben Exzentermechanismus 1195-1196 wird auch die Klemmeinrichtung 1160 und die mit ihr verbundene Schneideinrichtung 1170 betätigt. Der Exzentermechanismus 1195-1196 ist von einem nicht dargestellten ortsfesten Motor angetrieben, der seinerseits mit der Steuerung 1300 verbunden ist und von dieser gesteuert wird.

### Die Funktionsweise der Aufzeichnungsvorrichtung ist wie folgt:

Nachdem eine Vorratsrolle 1130 von Aufzeichnungsmedium M auf dem Spanndorn 1120 im Inneren der Spanntrommel 1100 befestigt ist, wird der Anfang des bahnförmigen Aufzeichnungsmediums M zwischen den Klemmrollenpaar 1152-1153 durch den Schlitz 1140 per Hand nach außen geführt, um den Mantel 1110 der Spanntrommel 1100 herum geführt und mittels der Klemmeinrichtung 1160 festgelegt. Die Antriebseinrichtung 1190 befindet sich in ihrer inaktiven Stellung, bei welcher die Antriebswalze 1192 vom Mantel 1110 abgehoben ist. Damit ist das Aufzeichnungsmedium M auf der Spanntrommel 1100 festgelegt und die Vorrichtung für den Aufzeichnungsvorgang bereit (Fig. 19).

Nun wird die Spanntrommel 1100 mitsamt dem Aufzeichnungsmedium M in Rotation in Richtung des Pfeils D versetzt und die aufzuzeichnende Bildinformation wird mittels der Aufzeichnungseinheit 1200 auf den auf dem Mantel 1110 befindlichen Abschnitt des Aufzeichnungsmediums M oder einen Teil desselben in an sich bekannter Weise aufgezeichnet. Wenn der Aufzeichnungsvorgang beendet ist, wird die Spanntrommel 1100 in der vorstehend erwähnten, definierten Drehstellung (Parkposition) angehalten.

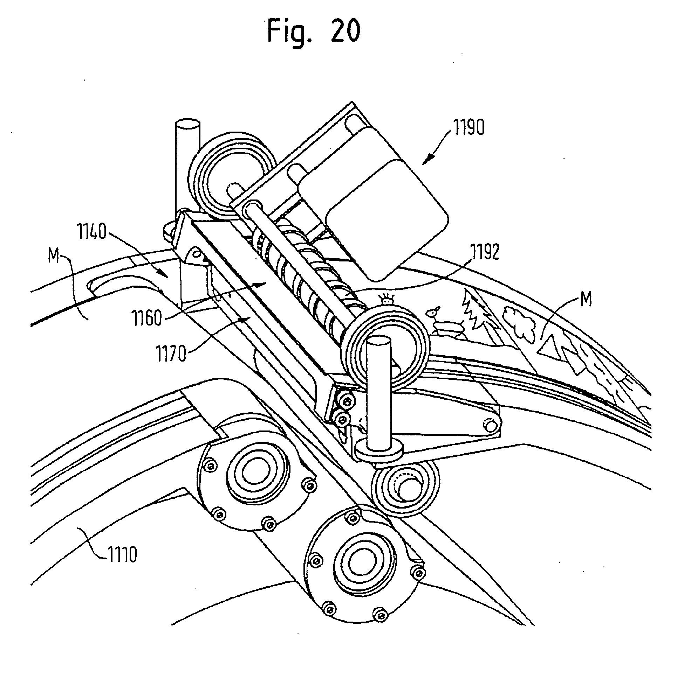

Nun wird, wie in Fig. 20 dargestellt, die Antriebseinrichtung 1190 auf den Mantel 1110 abgesenkt, so dass die Antriebswalze 1192 mit dem auf dem Mantel befindlichen Aufzeichnungsmedium M in Eingriff kommt. Gleichzeitig oder unmittelbar danach wird die Klemmeinrichtung 1160 zusammen mit dem Messerbalken 1170 vom Mantel 1110 abgehoben, so dass das Aufzeichnungsmedium M an dieser Stelle nur noch von der Antriebswalze 1192 auf dem Mantel 1110 festgehalten wird.

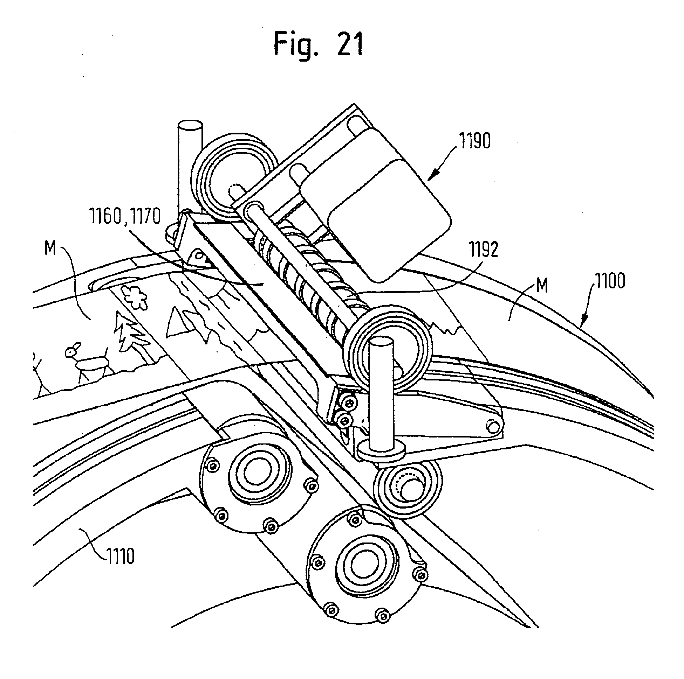

Jetzt wird der beschriebene (bildtragende) Abschnitt des Aufzeichnungsmediums M ausgestoßen (Fig. 21). Dazu wird die Antriebswalze 1192 in Bewegung gesetzt und damit die Aufzeichnungsmediumbahn M in Drehrichtung der Spanntrommel 1100 unter dem Messerbalken 1170 durch so weit nach vorne geschoben, bis sich das hintere Ende des beschriebenen Abschnitts unter dem Messerbalken 1170 befindet.

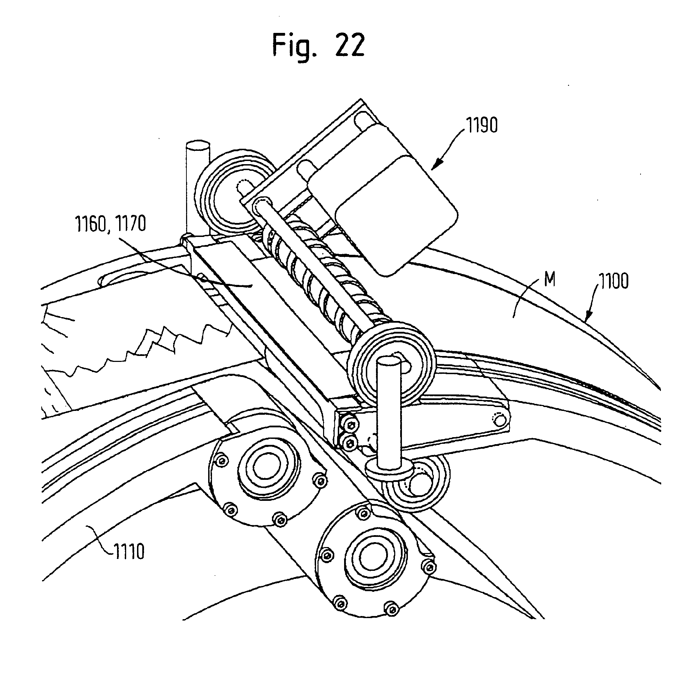

Danach wird die Klemmeinrichtung 1160 zusammen mit dem mit ihr verbundenen Messerbalken 1170 wieder gegen den Mantel 1110 gepresst und gleichzeitig oder unmittelbar darauf die Antriebseinrichtung 1190 wieder vom Mantel 1110 abgehoben. Durch die Abwärtsbewegung (bezogen auf die Trommel radial einwärts) der Klemmeinrichtung 1160 und des Messerbalkens 1170 wird der beschriebene Abschnitt des Mediums abgeschnitten und der neue Anfang des noch unbeschriebenen Mediums auf der Spanntrommel festgeklemmt. Nun steht die Vorrichtung für den nächsten Aufzeichnungsvorgang bereit (Fig. 22).

Bei der vorstehend beschriebenen Aufzeichnungsvorrichtung ist das Problem einer automatischen Beladung oder Entladung nicht gelöst.

Aufgabe der Erfindung ist es, eine fotografische Aufzeichnungsvorrichtung bereitzustellen, die automatisch mit einem Mediumband be- und/oder entladen werde kann.

Vorstehende Aufgabe ist durch Anspruch 1 gelöst. Die abhängigen Ansprüche 2 bis 13 sind auf vorteilhafte Ausführungen der Erfindung gerichtet. Der Verfahrensanspruch 14 betrifft ein vorteilhaftes Verfahren zum Beladen der erfindungsgemäßen Vorrichtung.

Die erfindungsgemäße fotografische Aufzeichnungsvorrichtung dient dem Aufzeichnen fotografischer Bilder auf einem Mediumband. Bei dem Mediumband kann es sich z.B. um Normalpapier, lichtempfindliches Fotopapier, Thermopapier oder Kunststofffolien usw. handeln. Die Aufzeichnung der fotografischen Bilder auf dem Mediumband erfolgt mit einer für das jeweilige Medium geeigneten Aufzeichnungseinheit. Beispielsweise kann es sich um eine Tintenstrahl-Aufzeichnungseinheit handeln, die Tinte auf Normalpapier aufbringt. Auch kann die Aufzeichnungseinheit beispielsweise Toner auf Normalpapier aufbringen. Auch kann die Aufzeichnungseinheit ausgebildet sein, um ein lichtempfindliches Medium, wie z.B. ein Fotopapier, zu belichten. Dazu kann die Aufzeichnungseinheit beispielsweise Laser oder Licht abgebende Anzeigevorrichtungen (Kathodenstrahlröhren, LCD-Displays) aufweisen. Die Aufzeichnungseinheit kann auch durch Wärme, beispielsweise mit einem Thermokopf, in Zusammenwirkung mit Thermopapier die fotografischen Bilder auf dem Medium aufbringen.

Das Mediumband wird von einer Mediumquelle abgegeben. Bei dieser kann es sich z.B. um eine Rolle handeln, von der das Mediumband abwickelbar ist. Das Mediumband kann aber z.B. auch im gefalteten Zustand vorliegen. Das Mediumband kann in einer Kassette untergebracht sein.

Vorteilhaft umfasst die fotografische Aufzeichnungsvorrichtung eine Spannanordnung, die eine Spannstrecke vorgibt, entlang der das Mediumband spannbar ist. Bei der Spannanordnung handelt es sich vorzugsweise um eine Spanntrommel, bei der die Spannstrecke insbesondere entlang eines Kreises läuft. Der Vorzug einer kreisförmigen Spannstrecke liegt darin, dass bei Drehung der Spannanordnung und bei stationärer Aufzeichnungseinheit ein konstanter Abstand zwischen dem gespannten Mediumband und der Aufzeichnungseinheit gewährleistet ist. Jedoch können auch andere Spannanordnungen verwendet werden, die beispielsweise eine Spannstrecke realisieren, bei der mehrere geradlinige Spannabschnitte aneinander gereiht sind. Beispielsweise kann eine vieleckige bzw. mehrseitige Spannanordnung realisiert werden, bei der jeweils eine Aufzeichnungseinheit einem Streckenabschnitt zugeordnet ist und entlang diesem zur Aufzeichnung eines Bildes geführt wird. Dadurch können mehrere Bilder parallel entlang der Spannstrecke aufgezeichnet werden. Nach der parallelen Aufzeichnung kann dann die Spannanordnung beispielsweise bewegt oder gedreht werden, um auf verbliebenen Abschnitten Bilder aufzuzeichnen.

Die Spannstrecke hat einen Streckenanfang, der ausgebildet ist, um das Mediumband zu empfangen. Die Mediumquelle und der Streckenanfang sind so angeordnet, dass das Mediumband dem Streckenanfang zuführbar ist. Die Spannstrecke ist so ausgebildet, dass das Mediumband entlang der Spannstrecke führbar und spannbar ist. Beispielsweise ist die Spannstrecke als zylindrische Mantelbahn ausgebildet, auf der das Mediumband gleiten kann und die dem Mediumband beim Spannen eine kreisförmige Form verleiht. Alternativ kann die Spannanordnung die Spannstrecke beispielsweise mit einem Gerüst ausbilden, wobei das Band zwischen den Gerüstabschnitten gespannt ist.

Sind mehrere Aufzeichnungseinheiten vorgesehen, die voneinander unabhängig zum Aufzeichnen der Bilder bewegbar sind, so ergibt sich der Vorteil, dass jede Aufzeichnungseinheit individuell den Aufzeichnungsprozess durch einen individuellen Abtastvorgang in Abhängigkeit von den jeweiligen Bilddaten optimieren und somit beschleunigen kann.

Am Streckenende ist vorteilhaft ein erster Haltemechanismus vorgesehen. Dieser dient dazu, das Mediumband am Streckenende festzuhalten, um es entlang der Spannstrecke spannen zu können. Das Spannen wird beispielsweise so durchgeführt, dass das Mediumband in die Mediumquelle zurück transportiert wird oder dass zwischen Mediumquelle und Streckenanfang eine Schleife gebildet wird, bis das Mediumband gespannt ist.

Die Spannanordnung ist vorzugsweise relativ zu einem Aufzeichnungsapparat oder mehreren Aufzeichnungsapparaten bewegbar, vorzugsweise relativ dazu drehbar, um im Zusammenwirken mit dem Aufzeichnungsapparat die Bilder auf dem gespannten Mediumband aufzuzeichnen. Vorzugsweise ist die Spannanordnung, beispielsweise eine Spanntrommel, relativ zum Aufzeichnungsapparat drehbar gelagert und der mindestens eine Aufzeichnungsapparat ist stationär angeordnet. Jedoch kann dies auch umgekehrt gelöst werden, so dass der Aufzeichnungsapparat beweglich ist und die Spannanordnung stationär ist. Schließlich können sowohl die Spannanordnung als auch der mindestens eine Aufzeichnungsapparat bewegbar gelagert werden, um so eine Relativbewegung zwischen dem Aufzeichnungsapparat und der Spannanordnung zu erzielen, um die Bilder aufzuzeichnen.

Die Beweglichkeit der Spannanordnung dient erfindungsgemäß vorteilhaft auch dazu, die Spannanordnung mit dem Mediumband zu beladen. Sie erfüllt also vorteilhaft eine doppelte Funktion, denn sie wird vorzugsweise sowohl zum Aufzeichnen als auch zum Beladen verwendet.

Vorteilhaft ist neben dem ersten Haltemechanismus ein zweiter Haltemechanismus vorgesehen, relativ zu dem die Spannanordnung bewegbar ist. Vorzugsweise ist der zweite Haltemechanismus stationär und die Spannanordnung lässt sich relativ zu dem zweiten Haltemechanismus bewegen, insbesondere drehen. Der zweite Haltemechanismus ist dazu ausgebildet, ein Mediumband festzuhalten. Vorzugsweise ist der zweite Haltemechanismus auf einer Seite der Spannstrecke, also beispielsweise außerhalb der Spanntrommel, angeordnet, während die Mediumquelle auf der anderen Seite der Spannstrecke, also beispielsweise im Inneren der Spanntrommel angeordnet ist. Vorzugsweise ist das Mediumband durch eine Unterbrechung zwischen Streckenanfang und Streckenende von der Mediumquelle zum zweiten Haltemechanismus führbar. Bei dieser Unterbrechung kann es sich beispielsweise um einen Spalt in der Spanntrommel handeln. Die Spännstrecke ist also vorzugsweise so gestaltet, dass das Streckenende dem Streckenanfang näher ist als der Streckenmitte.

Vorteilhaft ist weiter ein Transportmechanismus, wie beispielsweise eine Transportrolle, vorgesehen, die zum Transportieren des Mediumbandes eine Kraft auf dieses überträgt, so dass es entlang der Spannstrecke gleitet. Der Transportmechanismus ist so angeordnet, dass er das Mediumband zwischen dem ersten und zweiten Haltemechanismus transportiert, wenn die Spannanordnung relativ zum zweiten Haltemechanismus eine bestimmte Stellung (erste vorgegebene Stellung) einnimmt. Hierzu wird die Spannanordnung relativ zum zweiten Haltemechanismus bewegt, insbesondere gedreht. Der Transportmechanismus ist vorzugsweise, in Abgaberichtung des Mediumbandes gesehen, vor dem Streckenende mit dem Mediumband in und außer Kontakt bringbar, insbesondere bei oder in der Nähe des ersten Haltemechanismus, insbesondere direkt bei dessen Einlassbereich für ein Vorderende des Mediumbandes.

Erfindungsgemäß ist eine Steuerung vorgesehen. Die Steuerung dient insbesondere dazu, ein Mediumband zwischen dem ersten und dem zweiten Haltemechanismus zu übergeben. Vorzugsweise ist die Steuerung so ausgebildet, dass durch sie sowohl das Mediumband von dem ersten Haltemechanismus zu dem zweiten Haltemechanismus als auch von dem zweiten Haltemechanismus zu dem ersten Haltemechanismus übergeben werden kann. Zur Übergabe des Mediumbandes wird der Transportmechanismus eingesetzt, der von der Steuerung in der ersten vorgegebenen Stellung betätigt wird. In dieser ersten vorgegebenen Stellung befinden sich der erste Haltemechanismus, der Transportmechanismus und der zweite Haltemechanismus in einer vorgegebenen Positionsbeziehung. Zur Übergabe wird einer der beiden Haltemechanismen betätigt, um das von ihm gehaltene Mediumband freizugeben. Dann betätigt die Steuerung den Transportmechanismus, um das freigegebene Mediumband zu dem anderen der beiden Haltemechanismen zu transportieren. Vorzugsweise erfolgt der Transport des Mediumbandes so weit, bis der andere der beiden Haltemechanismen das Mediumband erfassen oder halten kann.

Vorzugsweise ist der Transportmechanismus, falls er nicht zum Transportieren benötigt wird, von dem Mediumband entfernbar, so dass sich die Spannanordnung frei bewegen kann, es also keinen Kontakt zwischen dem Mediumband und dem Transportmechanismus gibt, wenn die Spannanordnung bewegt, insbesondere gedreht wird. Zum Transport ist der Transportmechanismus mit dem Mediumband in Kontakt bringbar. Vorzugsweise ist der Transportmechanismus relativ zu der Spannanordnung so angeordnet, dass die Spannanordnung relativ zu dem Transportmechanismus bewegbar, insbesondere drehbar ist. Insbesondere ist der Transportmechanismus stationär, während die Spannanordnung beispielsweise drehbar gestaltet ist. Der Transportmechanismus kann auch so gestaltet werden, dass er sich mit der Spannanordnung mit bewegt. Jedoch wird im Hinblick auf die später beschriebene leichtere Bespannbarkeit der Spannanordnung eine relativ zur Spannanordnung stationäre Anordnung des Transportmechanismus bevorzugt, wobei dieser dann vorzugsweise mit dem ersten Haltemechanismus in einer bestimmten Stellung koppelbar ist, wie weiter unten näher erläutert wird.

Vorzugsweise bewegt sich die Spannanordnung um eine Achse, wobei der Transportmechanismus und der zweite Haltemechanismus stationär sind. Die Breitenerstreckungsrichtung des Mediumbandes ist vorzugsweise zumindest in etwa parallel zu der Achse. Vorzugsweise wird die Spannstrecke so um die Achse herumgeführt, dass sich eine Streckenöffnung zwischen dem Streckenanfang und dem Streckenende ergibt, durch den ein von der Mediumquelle abgegebenes Mediumband förderbar ist.

Ein interner Mediumförderer ist vorzugsweise vorgesehen und so angeordnet, dass er ein von der Mediumquelle abgegebenes Mediumband durch die Streckenöffnung ausgibt. Der interne Mediumförderer ist dabei vorzugsweise so ausgebildet, dass er das Mediumband zu dem zweiten Haltemechanismus hin transportiert, so dass der zweite Haltemechanismus das Mediumband erfassen kann, wenn die Spannanordnung eine bestimmte Stellung (zweite vorgegebene Stellung) relativ zu dem zweiten Haltemechanismus einnimmt. Vorzugsweise stimmt die zweite vorgegebene Stellung mit der bereits oben erwähnten ersten vorgegebenen Stellung zumindest in etwa überein. Um dies zu bewerkstelligen, weist der interne Mediumförderer vorzugsweise nicht nur einen Fördermechanismus auf, um aktiv eine Transportkraft auf das Mediumband zu übertragen (z.B. Transportrollen), sondern ebenso eine Führung, die das transportierte Mediumband in Richtung auf den zweiten Haltemechanismus führt, wenn die Spannanordnung in der zweiten vorgegebenen Stellung ist. Vorzugsweise ist diese Führung auch so gestaltet, dass das Mediumband auch in Richtung des Streckenanfangs gefördert wird, wenn es von dem internen Mediumförderer von der Mediumquelle weg transportiert wird.

Die Führung des internen Mediumförderers wirkt vorzugsweise mit einer weiteren Führung zusammen, um das Mediumband in die gewünschte Richtung zu führen. Diese weitere Führung kann beispielsweise mit dem ersten Haltemechanismus mechanisch verbunden sein. Die zweite Führung kann insbesondere verschiedene Stellungen, gesteuert durch die Steuerung, einnehmen. Dies wird weiter unten noch näher erläutert.

Dadurch, dass der interne Mediumförderer das Mediumband von der Mediumquelle durch die Streckenöffnung hindurch zu dem zweiten Haltemechanismus transportieren kann, lässt sich die Spannanordnung automatisch bespannen, indem der zweite Haltemechanismus das Mediumband festhält, während sich die Spannanordnung dreht. Während der Drehung wird das Mediumband aus der Mediumquelle durch den internen Mediumförderer gefördert. Das Mediumband ist dabei wiederum vorzugsweise zumindest in etwa parallel zu der Drehachse. Der interne Mediumförderer und der zweite Haltemechanismus sind hierzu entsprechend ausgebildet.

Die Drehung endet vorzugsweise dann, wenn das Streckenende die vorbestimmte Stellung gegenüber dem zweiten Haltemechanismus eingenommen hat. An diesem Streckenende ist vorzugsweise auch der erste Haltemechanismus angeordnet. In dieser ersten vorgegebenen Stellung kann dann die Übergabe des entlang der Spannstrecke geführten Mediumbandes von dem zweiten Haltemechanismus, der das Mediumband (Vorderende des Mediumbandes) noch hält, zu dem ersten Haltemechanismus erfolgen. In dieser Stellung verläuft das Mediumband von der Mediumquelle über den internen Mediumförderer zu dem Streckenanfang, entlang der Spannstrecke und über das Streckenende hinweg zu dem zweiten Haltemechanismus.

Die Steuerung ist nun so ausgebildet, dass sie die Übergabe des Mediumbandes von dem zweiten Haltemechanismus zu dem ersten Haltemechanismus bewirkt. Dazu wird der zweite Haltemechanismus angesteuert, um das gehaltene Mediumband freizugeben und der Transportmechanismus wird angesteuert, um das Mediumband (das Vorderende des Mediumbandes) entgegen der Bandabgaberichtung zu transportieren, so dass das Vorderende sich dem ersten Haltemechanismus nähert.

Ist das Mediumband, insbesondere das Vorderende des Mediumbandes, in der Nähe des ersten Haltemechanismus, so wird der erste Haltemechanismus angesteuert, um das Vorderende zu erfassen. Hierzu wird vorzugsweise das Vorderende des Mediumbandes durch den Transportmechanismus zuerst an dem ersten Haltemechanismus vorbei entgegen der Abgaberichtung gefördert. Dann wird der erste Haltemechanismus geöffnet (zweite Ladestellung), so dass er das Vorderende aufnehmen kann. Dann wird das Mediumband wieder in Abgaberichtung gefördert, bis das Vorderende des Mediumbandes durch den ersten Haltemechanismus erfasst werden kann. Dann wird der erste Haltemechanismus geschlossen (erste Ladestellung), um so das Vorderende des Mediumbandes festzuhalten.

Wird das Mediumband, insbesondere dessen Vorderende, durch den ersten Haltemechanismus am Streckenende festgehalten, so wird das Mediumband durch den Transportmechanismus und/oder den internen Mediumförderer entgegen der Abgaberichtung des Mediumbandes gefördert, um so das Mediumband entlang der Spannstrecke zu spannen.

Vorzugsweise nimmt die Spannanordnung zumindest eine ähnliche Drehstellung ein, wenn das Mediumband von dem internen Mediumförderer zu dem zweiten Haltemechanismus übergeben wird, wie wenn das Mediumband von dem zweiten Haltemechanismus zu dem ersten Haltemechanismus übergeben wird. Die erste vorgegebene Stellung stimmt also vorzugsweise mit der zweiten vorgegebenen Stellung so überein, dass die Spannanordnung zum Beladen der Spannstrecke mit dem Mediumband zumindest in etwa eine volle Drehung oder mehr durchführt.

Ist das Mediumband über die Spannanordnung gespannt, so erfolgt dann die Aufzeichnung der Bilder auf das Mediumband durch den mindestens einen Aufzeichnungsapparat. Hierzu wird vorzugsweise die Spannanordnung gedreht, während der mindestens eine Aufzeichnungsapparat stationär bleibt. Auch hierzu wird vorzugsweise wiederum eine vollständige Drehung des Mediumbandes durchgeführt. Diese Drehung wird durch den Transportmechanismus nicht behindert, denn dieser wird durch die Steuerung veranlasst, während des Aufzeichnungsvorganges und der dazu erforderlichen Drehung außer Kontakt mit dem Mediumband zu sein. Ist eine Anzahl vollständiger Drehungen erfolgt oder sind eine Anzahl Drehungen so weit erfolgt, dass die Spannanordnung in der ersten vorgegebenen Stellung ist, und ist die Aufzeichnung beendet so erfolgt eine Übergabe des Mediumbandes, insbesondere des Vorderende des Mediumbandes, von dem ersten Haltemechanismus zu dem zweiten Haltemechanismus mittels der Steuerung, um das mit Bildern versehene Mediumband von der Spannanordnung zu entladen. Für den Aufzeichnungsvorgang werden bevorzugt mehrere Drehungen durchgeführt, um beispielsweise zeilenweise aufzuzeichnen.

Zur Übergabe von dem ersten Haltemechanismus zu dem zweiten Haltemechanismus wird der Transportmechanismus mit dem Mediumband wieder in Kontakt gebracht und der erste Haltemechanismus wird gelöst, um das Vorderende des Mediumbandes freizugeben. Das Mediumband wird dann durch den Transportmechanismus von dem ersten Haltemechanismus zu dem zweiten Haltemechanismus gefördert. Vorzugsweise wird dies unterstützt durch eine Führung, die mit der Rückseite der bereits oben erwähnten weiteren Führung übereinstimmen kann. Diese Führung wird vorzugsweise dann in eine aktive Stellung verlagert, in der sie das Mediumband von dem ersten Haltemechanismus zum zweiten Haltemechanismus führt, wenn der erste Haltemechanismus geöffnet wird.

Vorzugsweise ist eine Schneidvorrichtung vorgesehen, die das Mediumband durchtrennt, wenn es über eine vorgegebene Länge von der Spannanordnung abgefördert bzw. entladen wurde. Vorzugsweise ist die Schneidvorrichtung mechanisch mit der Spannanordnung verbunden, dreht sich also mit dieser mit. Sie kann aber auch stationär angeordnet sein. Um das Mediumband über die vorgegebene Länge abzufördern, ist vorzugsweise der zweite Haltemechanismus auch zum Fördern des Bandes ausgebildet. Beispielsweise kann er zwei Rollen aufweisen, zwischen denen das Band gehalten wird, wenn sich die Rollen nicht drehen, und gefördert wird, wenn sich die Rollen drehen.

Vorzugsweise weist der erste Haltemechanismus die Schneidvorrichtung (erste Schneidvorrichtung) auf und/oder ist mit ihr mechanisch gekoppelt. Die mechanische Kopplung ist vorzugsweise derartig, dass ein Mediumband durchtrennt wird, wenn der erste Haltemechanismus von der offenen Stellung (zweite Ladestellung) in die geschlossene Stellung (erste Ladestellung) übergeht.

Ist das Mediumband über eine vorgegebene Länge von der Spannanordnung zum Entladen abtransportiert, so wird es vorzugsweise von dem zweiten Haltemechanismus zu einem dritten Haltemechanismus übergeben. Nach diesem dritten Haltemechanismus, der vorzugsweise auch zum Fördern des Mediumbandes ausgebildet ist, ist vorzugsweise eine zweite Schneidvorrichtung angeordnet. Diese dient dazu, das Mediumband in Unterabschnitte aufzuteilen, die vorzugsweise jeweils ein Bild enthalten. Die Durchtrennung mittels der zweiten Schneidvorrichtung erfolgt vorzugsweise erst dann, wenn die erste Schneidvorrichtung das Mediumband durchtrennt hat. Vorzugsweise erfolgt auch erst dann ein Weitertransport des (abgetrennten) Mediumbandes von dem dritten Haltemechanismus zu der zweiten Schneidvorrichtung. Der zweite und dritte Haltemechanismus ist vorzugsweise derart voneinander beabstandet, dass sich eine Schleife des Mediumbandes zwischen ihnen bildet, bevor das (abgetrennte) Mediumband von dem dritten Haltemechanismus zu der zweiten Schneidvorrichtung weiter transportiert wird. Anders ausgedrückt, der Abstand zwischen dem zweiten und dritten Haltemechanismus ist vorzugsweise kürzer als die Länge des abgetrennten Mediumbandes (z.B. weniger als die ½-, ¼- oder 1/10-Länge), das zumindest in etwa mit der Länge der Spannstrecke übereinstimmt. Auf diese Art und Weise kann eine besonders kompakte Aufzeichnungsvorrichtung realisiert werden.

Der erste Haltemechanismus ist vorzugsweise in eine Stellung (erste Ladestellung) verbringbar, in der er nicht die Übergabe zwischen dem ersten Haltemechanismus und dem zweiten Haltemechanismus behindert. Dies ist insbesondere beim Beladen bzw. Bespannen der Spannanordnung von Vorteil. Vorzugsweise ist der erste Haltemechanismus hierzu verlagerbar, so dass er nicht in einen Förderweg zwischen dem ersten Haltemechanismus und dem zweiten Haltemechanismus hineinragt. Insbesondere ist der erste Haltemechanismus in der Spannanordnung, insbesondere der Spanntrommel, versenkbar.

Der erste Haltemechanismus ist vorzugsweise so ausgebildet, dass das Mediumband in einem geöffneten Zustand (zweite Ladestellung) des Haltemechanismus durch den ersten Haltemechanismus hindurch transportierbar ist. Beispielsweise ist das Mediumband zwischen zwei Klemmbacken des Haltemechanismus transportierbar. Vorzugsweise ist die erste und zweite Ladestellung so gestaltet, dass das Materialband bei der Übergabe zwischen dem ersten und zweiten Haltemechanismus entlang demselben Förderweg förderbar ist.

Der erste Haltemechanismus ist vorzugsweise derartig verlagerbar, dass das Mediumband (in der ersten Ladestellung) an dem ersten Haltemechanismus vorbei transportiert werden kann, ohne durch den ersten Haltemechanismus hindurch transportiert zu werden, also ohne z.B. zwischen den Klemmbacken hindurch transportiert zu werden. Anders ausgedrückt, ist der erste Haltemechanismus derartig verlagerbar, dass ein freier Transport des Vorderendes des Mediumband, das sich einlassseitig des ersten Haltemechanismus befindet, zu dem zweiten Haltemechanismus möglich ist, ohne dass das Vorderende des Mediumbandes in den Erfassungsbereich des ersten Haltemechanismus gelangt. In dieser sog. ersten Ladestellung des Haltemechanismus ist also das Vorderende des Mediumbandes von der Spannanordnung, insbesondere von dem Streckenende der Spannanordnung zu dem zweiten Haltemechanismus transportierbar, ohne von dem ersten Haltemechanismus (beispielsweise von einem Klemmbacken) behindert zu werden. Eine Behinderung des Transports besteht insbesondere in dem Abknicken oder Ablenken des Mediumbandes beim Weitertransport durch den unerwünschten Kontakt mit dem ersten Haltemechanismus oder in einer Stauchung des Mediumbandes. Auch ist vorzugsweise der zweite Haltemechanismus so relativ zu dem ersten Haltemechanismus angeordnet, dass eine derartige Behinderung ausgeschlossen ist.

Vorzugsweise verläuft die gesteuerte Transportrichtung des Mediumbandes, wenn sich der erste Haltemechanismus in der ersten Ladestellung zum Beladen der Spannanordnung befindet, also beispielsweise versenkt ist, in die umgekehrte Richtung, wie wenn der erste Haltemechanismus zum Entladen der Spannanordnung geöffnet ist und das Mediumband so transportiert wird, dass es von dem ersten Haltemechanismus erfasst werden kann, also beispielsweise zwischen zwei Klemmbacken hindurch transportiert wird.

Bei einer vorteilhaften Ausführungsform stimmt die erste Ladestellung mit der Klemmstellung oder Festhaltestellung des ersten Haltemechanismus überein. Ist der erste Haltemechanismus beispielsweise in der Klemmstellung, so wird das Mediumband durch die Innenseiten der beiden Klemmbacken gehalten. Ist es in der ersten Ladestellung, die mit der Klemmstellung übereinstimmt, so ist das Mediumband entlang der Rückseite desjenigen Klemmbackens geführt, der zum Transportmechanismus hinweist.

Die offene Stellung des ersten Haltemechanismus, in der das Mediumband dem ersten Haltemechanismus beispielsweise am Ende des Beladevorganges zum Festhalten zugeführt werden kann oder in der zu Beginn des Entladens der erste Haltemechanismus das Mediumband abgeben kann, wird hierin als zweite Ladestellung bezeichnet. Zur Übergabe zwischen dem ersten Haltemechanismus und dem zweiten Haltemechanismus wird, wie bereits oben bemerkt, für das Beladen der erste Haltemechanismus vorzugsweise in die erste Ladestellung gebracht, so dass die zweite Ladestellung frei gestaltet werden kann. Vorzugsweise wird sie so gestaltet, dass in der zweiten Ladestellung ein Transport (in umgekehrter Richtung) zwischen dem ersten Haltemechanismus und dem zweiten Haltemechanismus zum Entladen entlang demselben Förderweg wie zum Beladen erfolgt.

Der Transportmechanismus und der erste Haltemechanismus sind vorzugsweise miteinander mechanisch (z.B. über Steuerscheiben) und/oder elektrisch (z.B. über eine elektrische Steuerung und Stellmotoren) gekoppelt. Die Kopplung ist vorzugsweise derartig, dass in einer ersten gekoppelten Stellung der erste Haltemechanismus in der ersten Ladestellung ist, also eine freie Übergabe erlaubt, und der Transportmechanismus außer Kontakt mit einem auf der Spannstrecke geführten Mediumband ist. Stimmt die erste Ladestellung mit der Klemmstellung des ersten Haltemechanismus überein, wie dies vorzugsweise der Fall ist, so kann in der ersten gekoppelten Stellung ein Band über die Spannstrecke von dem ersten Haltemechanismus bis zum Streckenanfang gespannt werden. Da der Transportmechanismus außer Kontakt mit der Spannstrecke ist, kann das gespannte Mediumband in der ersten gekoppelten Stellung frei gedreht werden, um beispielsweise eine Aufzeichnung durchzuführen. Auch kann in der ersten gekoppelten Stellung die Spannanordnung in diejenige Stellung (zweite vorgegebene Stellung) bewegt werden, in der das Mediumband von dem internen Mediumförderer zu dem zweiten Haltemechanismus transportierbar ist. Die erste gekoppelte Stellung ist somit als Ausgangspunkt sowohl für das Beladen als auch für das Entladen (nach erfolgter Aufzeichnung) geeignet, wobei zum Beladen die erste gekoppelte Stellung bereits einen Transport erlaubt, während zu Beginn des Entladens das Mediumband in der ersten gekoppelten Stellung noch festgehalten wird.

In einer zweiten gekoppelten Stellung ist der erste Haltemechanismus in der ersten Ladestellung, das heißt er behindert eine Übergabe (zum Beladen) nicht, und die Transportrolle ist in Kontakt mit einem entlang der Spannstrecke geführten Mediumband (insbesondere in der Nähe des ersten Haltemechanismus). Somit kann in der zweiten gekoppelten Stellung zum Beladen eine Übergabe von dem zweiten Haltemechanismus zu dem ersten Haltemechanismus mittels des Transportmechanismus erfolgen, nachdem in der ersten gekoppelten Stellung die Spannanordnung frei gedreht wurde, während der zweite Haltemechanismus das Mediumband festhält, umso die Spannanordnung zu beladen.

Auch stellt die zweite gekoppelte Stellung einen weiteren Schritt zum Entladen eines mit Bildern versehenen Mediumbandes dar. Während das Mediumband beim Entladen in der ersten Ladestellung noch von dem ersten Haltemechanismus gehalten wird, wird der Transportmechanismus bereits in Kontakt mit dem Mediumband gebracht. Dadurch wird das Mediumband auf der Spannstrecke auch dann gehalten, wenn in einem nächsten Schritt der erste Haltemechanismus gelöst wird (zweite Ladestellung).

In einer dritten gekoppelten Stellung wird der erste Haltemechanismus in die zweite Ladestellung gebracht, er ist also frei, ein gehaltenes Mediumband abzugeben oder ein Mediumband zum Halten aufzunehmen. Beim Beladen wird dem ersten Haltemechanismus in der dritten gekoppelten Stellung durch den Transportmechanismus das Mediumband zugeführt (nachdem es in der ersten Ladestellung in der umgekehrten Richtung am ersten Haltemechanismus vorbeigeführt wurde), so dass der erste Haltemechanismus durch Übergang in die erste Ladestellung das Mediumband dann halten kann. Beispielsweise erfolgt dies durch einen Übergang von der dritten gekoppelten Stellung in die zweite gekoppelte Stellung und dann in die erste gekoppelte Stellung, in der schließlich dann das Aufzeichnen der Bilder erfolgen kann.

Die dritte gekoppelte Stellung leitet auch das Ende des Entladvorganges ein. Der erste Haltemechanismus gibt in der zweiten Ladestellung das gehaltene Mediumband frei, das dann mittels des Transportmechanismus zu dem zweiten Haltemechanismus transportiert werden kann. Dabei erfolgt im Gegensatz zum Beladen der Transport nicht an dem ersten Haltemechanismus vorbei, sondern durch den Erfassungsbereich des ersten Haltemechanismus. Ist der erste Haltemechanismus mit einer (ersten) Schneidvorrichtung gekoppelt, wie oben dargestellt wurde, so kann einfach durch Schließen des ersten Haltemechanismus bzw. Übergang in die erste Lage das Mediumband durchtrennt werden, nachdem es entladen wurde. Dies erfolgt vorzugsweise durch Übergang von der dritten gekoppelten Stellung über die zweite gekoppelte Stellung zur ersten gekoppelten Stellung.

Erfindungsgemäß kann also durch die Abfolge der ersten und dann der zweiten und schließlich der dritten gekoppelten Stellung (und anschließender umgekehrter Abfolge) sowohl ein Beladevorgang als auch ein Entladevorgang realisiert werden, wenn die Steuereinrichtung die Transportvorgänge in Abhängigkeit von den gekoppelten Stellungen, wie oben beschrieben, jeweils geeignet durchführt.

Im folgenden wird eine Ausführungsform der vorliegenden Erfindung beschrieben. Dabei werden weitere vorteilhafte Merkmale offenbar, die miteinander kombiniert werden können.
- Fig. 1: ist eine Querschnittsansicht durch eine erfindungsgemäße Ausführungsform vor dem automatischen Beladevorgang;
- Fig. 2: zeigt die Ausführungsform der Fig. 1 zu Beginn des Beladevorgangs;
- Fig. 3: zeigt die Ausführungsform der Fig. 2 während des Beladens der Spanntrommel;
- Fig. 4: zeigt die Ausführungsform der Fig. 3 am Ende des Beladens der Spanntrommel und vor der Übergabe;
- Fig. 5: zeigt die Ausführungsform der Fig. 4 während der Übergabe;
- Fig. 6: zeigt die Ausführungsform der Fig. 5 beim Abschluss der Übergabe;
- Fig. 7: zeigt die Ausführungsform der Fig. 6 mit geöffnetem Klemmteil;
- Fig. 8: zeigt die Ausführungsform der Fig. 7 mit dem dem geöffneten Klemmteil zugeführten Mediumband;
- Fig. 9: zeigt die Ausführungsform der Fig. 8 mit festgeklemmtem Mediumband;
- Fig. 10: zeigt die Ausführungsform der Fig. 9 mit der Transportrolle in Kontakt mit dem Mediumband;
- Fig. 11: zeigt die Ausführungsform der Fig. 10 mit geöffnetem Klemmteil;
- Fig. 12: zeigt die Ausführungsform der Fig. 11 mit durch das Klemmteil transportiertem Mediumband;
- Fig. 13: zeigt die Ausführungsform der Fig. 12 mit Mediumband-Pufferschleife;
- Fig. 14: zeigt die Ausführungsform der Fig. 13 mit durchtrenntem Mediumband;
- Fig. 15: zeigt die Ausführungsform der Fig. 14 mit abgehobener Transportrolle;
- Fig. 16: zeigt die Ausführungsform der Fig. 15 mit gedrehter Spannrolle und verkleinerter Schlaufe;
- Fig. 17: zeigt die Ausführungsform der Fig. 16 mit abgearbeiteter Schlaufe, das Zerschneiden des bedruckten Mediums in die einzelnen Bilder und die Spanntrommel in Drehbewegung für den nächsten Aufzeichnungsvorgang;
- Fig. 18: zeigt eine Ausführungsform nach dem Stand der Technik;
- Fig. 19: zeigt eine Detailansicht der Ausführungsform der Fig. 18 mit geklemmtem Mediumband;
- Fig. 20: zeigt die Ausführungsform der Fig. 18 mit nicht geklemmtem Mediumband;
- Fig. 21: zeigt die Ausführungsform der Fig. 18 beim Abtransport des Mediumbandes; und
- Fig. 22: zeigt die Ausführungsform von Fig. 18 mit durchtrenntem Mediumband.

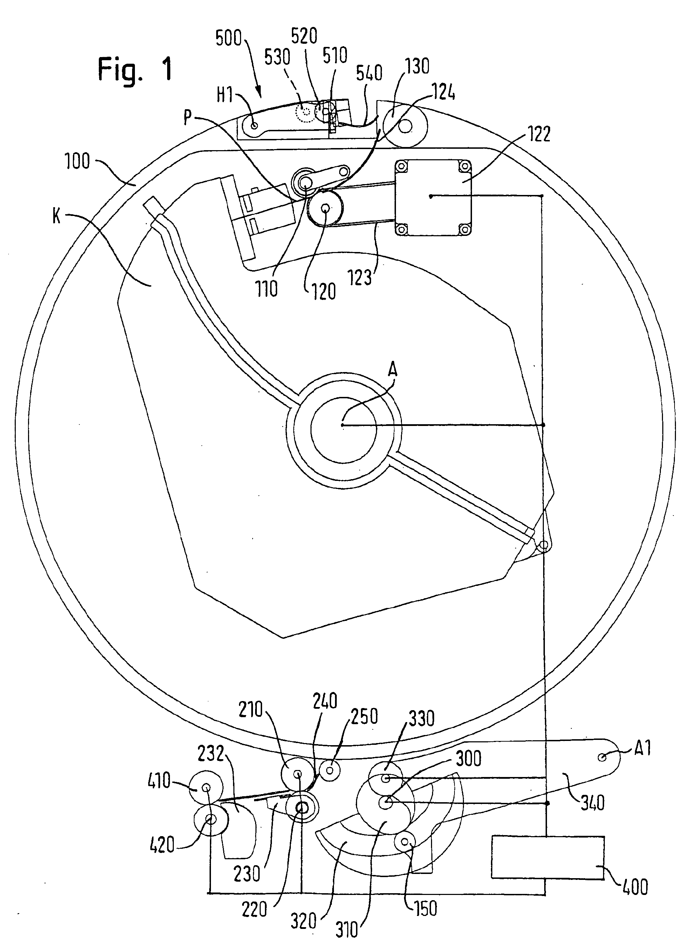

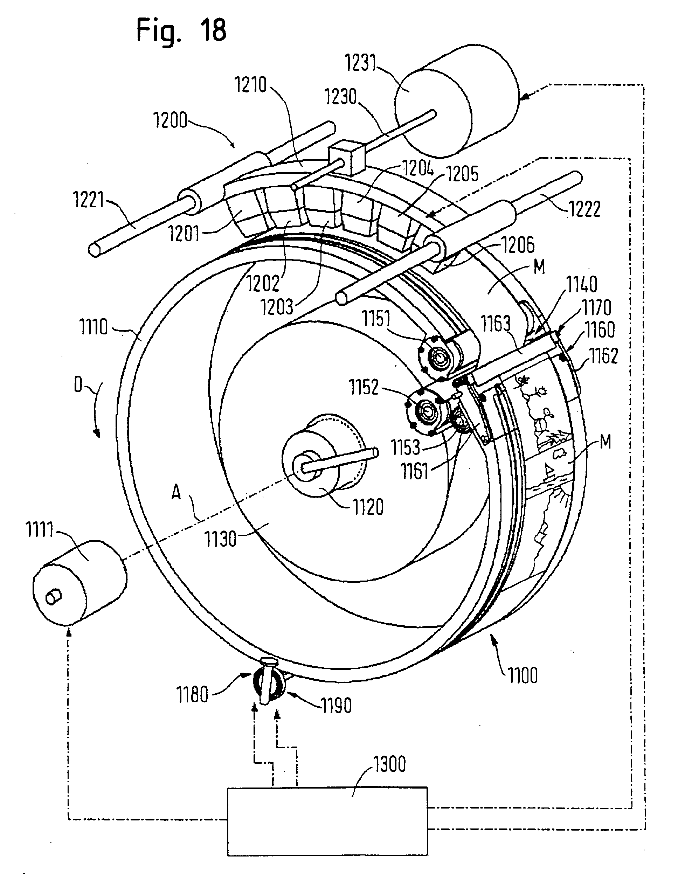

Fig. 1 ist eine Querschnittsansicht durch eine erfindungsgemäße Aufzeichnungsvorrichtung. Die Spannanordnung 100 ist eine Spanntrommel und entspricht der Spanntrommel 1110, die im Zusammenhang mit den Fig. 18 bis 23 beschrieben wurde. Ein dem Aufzeichnungsapparat 1200 der Fig. 18 entsprechender Aufzeichnungsapparat ist aus Übersichtlichkeitsgründen in der Fig. 1 nicht dargestellt. Die in Fig. 18 gezeigte Papierrolle 1130 befindet sich innerhalb der Kassette K der Fig. 1. Die Papierkassette K und die Spanntrommel 100 sind drehbar um die Achse A1 gelagert. Bei der Achse A1 handelt es sich um eine Welle, die über einen nicht gezeigten Elektromotor antreibbar ist, wie er beispielsweise in Fig. 18 als Motor 1111 gezeigt ist. Der Antriebsmotor für die Welle A1 wird von einer Steuereinrichtung 400 gesteuert. Die Spanntrommel 100 und die Kassette K sind mit der gleichen Antriebswelle A1 verbunden, so dass durch die Steuereinrichtung 400 sowohl die Kassette K als auch die Spanntrommel 100 in Drehung versetzt werden kann. Die Drehbewegung der Kassette K und der Spanntrommel 100 ist vorzugsweise so gekoppelt, dass sich die relative Lage des Papierauslasses der Kassette zum Beginn der Spannstrecke bei Rolle 130 nicht ändert. In Figur 1 links neben der Rolle 130 befindet sich der Trommelspalt (die Streckenöffnung). Die in der Kassette K enthaltene Mediumrolle gibt das Medium, insbesondere ein Papier P, am Ausgang bzw. Auslass der Kassette K zu zwei internen Förderrollen 110 und 120 ab, die zusammen mit dem Elektromotor 122 und der Führung 124 den internen Mediumförderer bilden. Die Rolle 110 ist eine Mitläuferrolle und die Rolle 120 wird von dem Elektromotor 122 über ein Band 123 angetrieben. Der Elektromotor 122 wird ebenfalls durch die Steuerung 400 angesteuert.

Die in Fig. 1 gezeigte Stellung ist der Ausgangszustand für das automatische Beladen der Spanntrommel 100 mit dem Medium P gemäß der vorliegenden Erfindung. Hierzu wird automatisch oder manuell das Medium P zwischen die Rollen 110 und 120 geführt und zwischen diesen Rollen gehalten. Beispielsweise ist hierzu die Rolle 110 gegen die Rolle 120 durch eine nicht gezeigte Feder vorgespannt. Die Führung 124 erstreckt sich von dem Auslassbereich der beiden Rollen 110 und 120, insbesondere ausgehend von der Rolle 120, bis in die Nähe einer Freilaufrolle 130, die sich am Anfang der Spannstrecke befindet und die für einen stetigen Übergang zu der kreisrunden Spannstrecke dient, indem sie passend in der Spanntrommel versenkt ist. Die Spannstrecke reicht von der Freilaufrolle 130 bis zu dem ersten Haltemechanismus 500 und genauer bis zu der Schneide 510, die Bestandteil des Haltemechanismus 500 ist.

Der erste Haltemechanismus 500 befindet sich in der in Fig. 1 gezeigten Stellung in der erste Ladestellung. In dieser ersten Ladestellung ist der Haltemechanismus 500 um die Welle H1 vorzugsweise derartig geschwenkt, dass er nicht oder nicht wesentlich über den kreisförmigen Umfang der Spanntrommel 100 hinaussteht. Anders ausgedrückt ist er in der Spannstrecke vorzugsweise versenkt.

Eine Rolle 520 ermöglicht es, den ersten Haltemechanismus 500 derartig zu erfassen, dass er um die Achse H1 von der Trommel weg geschwenkt werden kann. Dies wird später noch detaillierter beschrieben. Der erste Haltemechanismus 500 wird in der in Fig. 1 gezeigten ersten Ladestellung durch eine nicht gezeigte Feder gehalten.

Die Rolle 530 ist ebenso wie die Rolle 520 vorzugsweise in der Spanntrommel 100 versenkt. Die Rolle 530 reicht vorzugsweise bis zur kreisförmigen Oberfläche der Spannstrecke und unterstützt den Transport des Mediumbandes entlang der Spannstrecke, wie später noch beschrieben werden wird.

Der Haltemechanismus weist weiter eine Führung 540 auf. Diese wirkt vorzugsweise mit ihrer Seite, die dem Inneren der Spanntrommel zuweist, mit der Führung 124 zusammen, um das Mediumband zu dem zweiten Haltemechanismus und auch zu dem Streckenanfang zu führen, wie später noch beschrieben werden wird.

Die Steuereinrichtung 400 ist auch mit der Transportrolle 330 verbunden, die mit der Mitlaufrolle 530 zusammenwirkt, um das Mediumband anzutreiben, wie später beschrieben wird. Die Steuereinrichtung 400 treibt eine Welle an, auf der die Transportrolle 330 sitzt.

Die Steuerung 400 ist auch mit einer Kurvenwelle 300 verbunden, die zusammen mit einer kleinen Kurvenscheibe 310, einem Führungskugellager 150 und einer großen Kurvenscheibe 320 dazu dient, den ersten Haltemechanismus 500 und den Transportmechanismus 330 in die erste, zweite und dritte gekoppelte Stellung zu bringen. Dies wird später noch näher erläutert.

Das Führungskugellager 150 und die Transportrolle 330 sind auf einer Platte 340 angeordnet, die um die Achse A1 schwenkbar ist. Die Kurvenwelle 300, mit der fest die kleine Kurvenscheibe 310 und die große Kurvenscheibe 320 verbunden ist, ist stationär. In dem in Fig. 1 gezeigten Zustand drückt die kleine Kurvenscheibe 310 mit der Spitze ihrer eiförmigen Gestalt gegen das Führungskugellager 150. Dadurch wird die Platte 340 und damit die Transportrolle 330 von der Spanntrommel 100 entgegen der Kraft einer nicht gezeigten Feder weggeschwenkt und die Transportrolle 330 ist außer Kontakt mit der Spanntrommel 100. Sowohl das Führungskugellager 150 als auch die Transportrolle 330 sind mit der Platte 340 verbunden und schwenken mit dieser mit.

Die Rollen 210 und 220 bilden den zweiten Haltemechanismus. Die Rolle 210 wird mittels einer Welle über die Steuereinrichtung 400 angetrieben. Die Rolle 220 ist eine Mitläuferrolle. Die Mitläuferrolle 250 dient zusammen mit einer Führung 240 dazu, das Mediumband zwischen die beiden Rollen 210 und 220 hinzuführen bzw. davon weg zu führen.

In Mediumband-Abgaberichtung stromabwärts von den Rollen 210 und 220, also in Fig. 1 links von diesen beiden Rollen, sind zwei weitere Rollen 410 und 420 angeordnet, die dem Weitertransport eines mit Bildern versehenen Mediumbandes dienen. Die Rolle 420 ist eine Mitläuferrolle und die Rolle 410 wird mittels einer Welle über die Steuereinrichtung 400 angetrieben.

Ein schwenkbarer Führungsabschnitt 230 dient zusammen mit einem Führungsabschnitt 232 zum Führen des Mediumbandes zwischen den Rollen 210, 220 und den Rollen 410, 420. Der schwenkbare Führungsabschnitt 230 wird ebenfalls zum Schwenken durch die Steuereinrichtung 400 veranlasst. Dies wird später noch detaillierter beschrieben. Der Führungsabschnitt 230 wird bevorzugt indirekt mit einer Schleppkupplung angetrieben und ist optional.

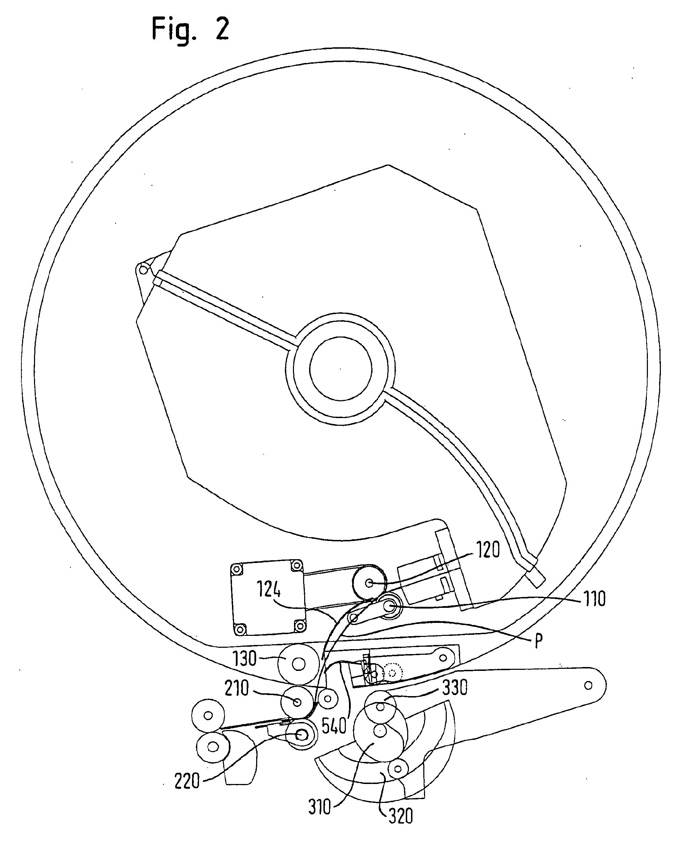

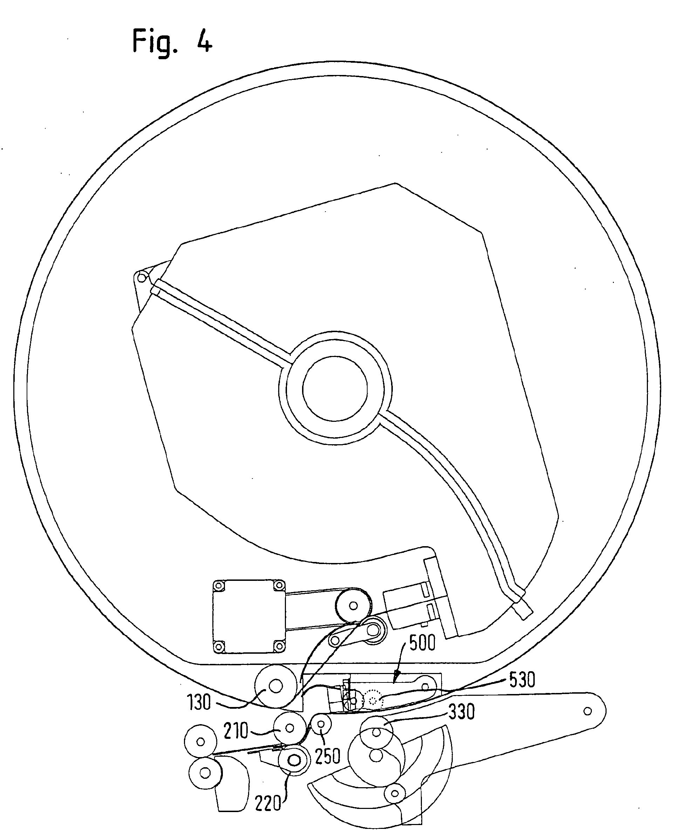

Fig. 2 zeigt die Spannrolle in einer vorgegebenen Stellung (zweite vorgegebene Stellung), bei der das Mediumband durch den internen Mediumförderer 110, 120 zwischen den Führungen 124 und 540 hindurch an der Rolle 130 vorbei über den Führungskanal 240 den Rollen 210 und 220 zum Halten des Mediumbandes zugeführt worden ist. Die dort gezeigte zweite vorgegebene Stellung stimmt nicht vollständig mit der oben erwähnten ersten vorgegebenen Stellung (siehe beispielsweise Fig. 4) bei der beispielhaft beschriebenen Ausführungsform überein. In der ersten vorgegebenen Stellung ist die Trommel beispielsweise um wenige Grad weiter im Uhrzeigersinn gedreht als in der zweiten vorgegebenen Stellung, dadurch ist der Abstand zwischen dem ersten und zweiten Haltemechanismus in der ersten vorgegebenen Stellung kleiner. Die Kurvenscheiben 310 und 320 sind wie in Fig. 1 in einer solchen Stellung, dass sich kein Kontakt zwischen der Transportrolle 330 und der Oberfläche der Spannrolle 100 ergibt. Auch ist kein Kontakt zum ersten Haltemechanismus gegeben.

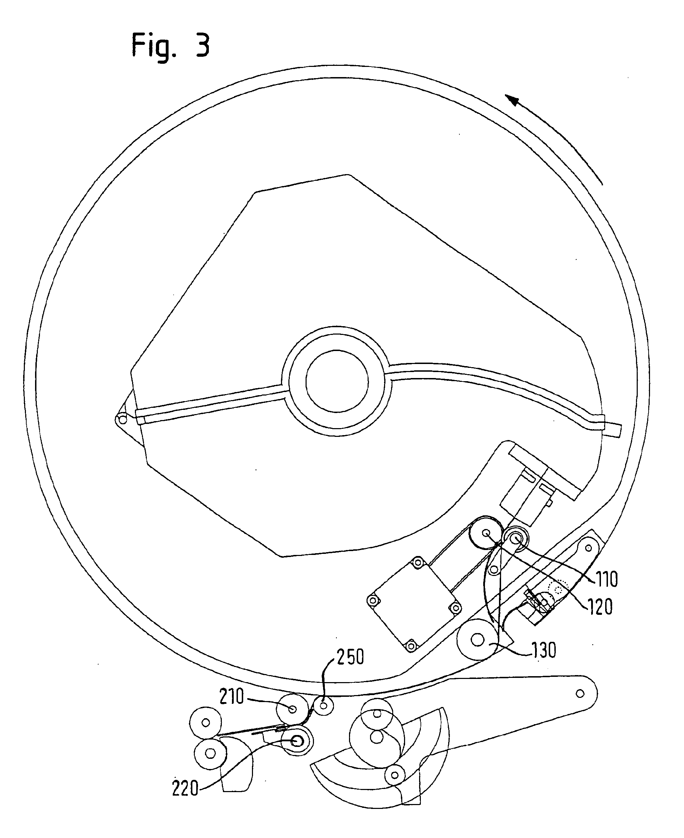

Die erste gekoppelte Stellung ist ebenfalls in Fig. 4 gegeben, wobei zwischen Fig. 2 und Fig. 4 eine in Fig. 3 angedeutete Drehung der Spanntrommel um die eigene Achse erfolgt ist. Durch diese Drehung wird das Mediumband entlang der Oberfläche der Spanntrommel 100 geführt, da das Mediumband von den Rollen 210 und 220 festgehalten wird. Bei dem in Fig. 3 gezeigten Zustand ist das Mediumband erst zu einem kleinen Teil entlang der Oberfläche geführt, und zwar von der Rolle 130 bis zur Rolle 250.

Auch in Fig. 4 ist das Mediumband von der Rolle 130 bis zur Rolle 250 geführt. Das Mediumband läuft aber auf Grund der erfolgten weiteren Drehung der Spanntrommel über den Haltemechanismus 500 hinaus. Die Spanntrommel hat, ausgehend von der Fig. 2, in etwa eine volle Drehung oder sogar etwas mehr als eine volle Drehung durchgeführt. Im Gegensatz zu der in Fig. 2 gezeigten zweiten vorgegebenen Stellung liegt nun die Transportrolle 330 gegenüber der Mitläuferrolle 530 in einer anderen Position. Auch nehmen die Führungen 540 und 124 nunmehr eine Lage ein, die nicht oder nur mehr bedingt dazu geeignet ist, das Mediumband zu den Rollen 210 und 220 zu führen. Stattdessen führen sie das Mediumband zu der Rolle 130 am Beginn der Spannstrecke. Die in Fig. 4 gezeigte Stellung stimmt mit der ersten gekoppelten Stellung überein.

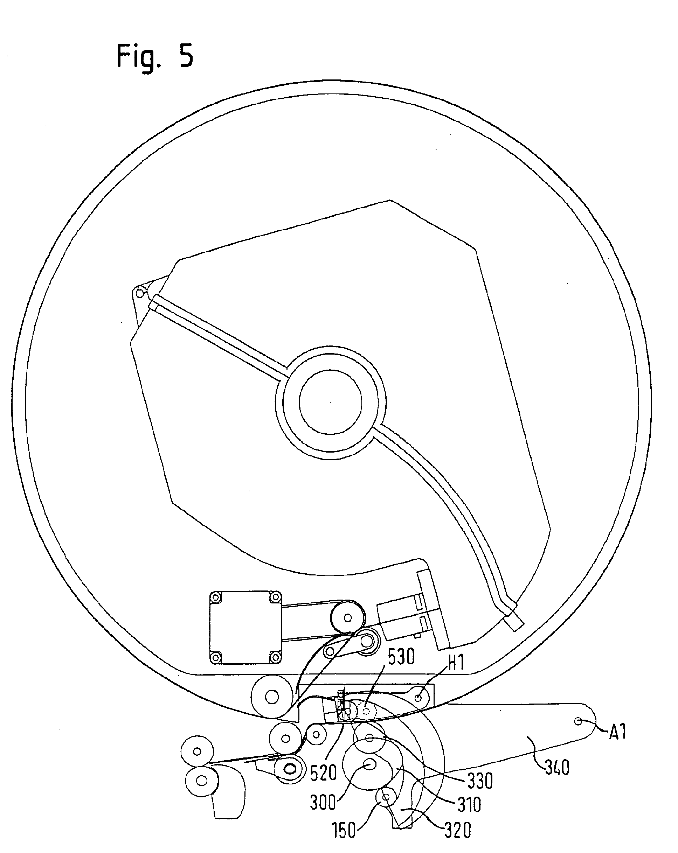

In Fig. 5 sind die Kurvenscheiben 310 und 320 um die Kurvenwelle 300 um 90° entgegen dem Uhrzeigersinn im Vergleich zu Fig. 4 gedreht. Dadurch ergibt sich die oben erwähnte zweite gekoppelte Stellung. Die kleine Kurvenscheibe 310 weist nun mit ihrer Schmalseite zu dem Führungskugellager 150, derartig, dass es keine Kraft mehr auf das Führungskugellager 150 ausübt. Insbesondere bildet sich ein Spalt zwischen der Kurvenscheibe 310 und dem Führungskugellager 150. Dadurch, dass keine Kraft mehr auf das Führungskugellager 150 von der Kurvenscheibe 310 ausgeübt wird, schwenkt die Platte 340 um die Achse A1 zu der Spanntrommel, bis die Transportrolle 330 mit dem auf der Spanntrommel geführten Mediumband in Kontakt ist. Das Mediumband liegt also zwischen der Transportrolle 330 und der Gegenrolle 530, und wird mittels diesen Rollen geklemmt.

Die Kurvenscheibe 320 kontaktiert in der in Fig. 5 gezeigten, zweiten gekoppelten Stellung die Rolle 520, die mit dem ersten Haltemechanismus fest verbunden ist, veranlasst aber den ersten Haltemechanismus noch nicht, um die Achse H1 zu schwenken. Die Spanntrommel hat die gleiche Drehstellung wie in Fig. 4, so dass das Mediumband die gleiche Strecke durchläuft.

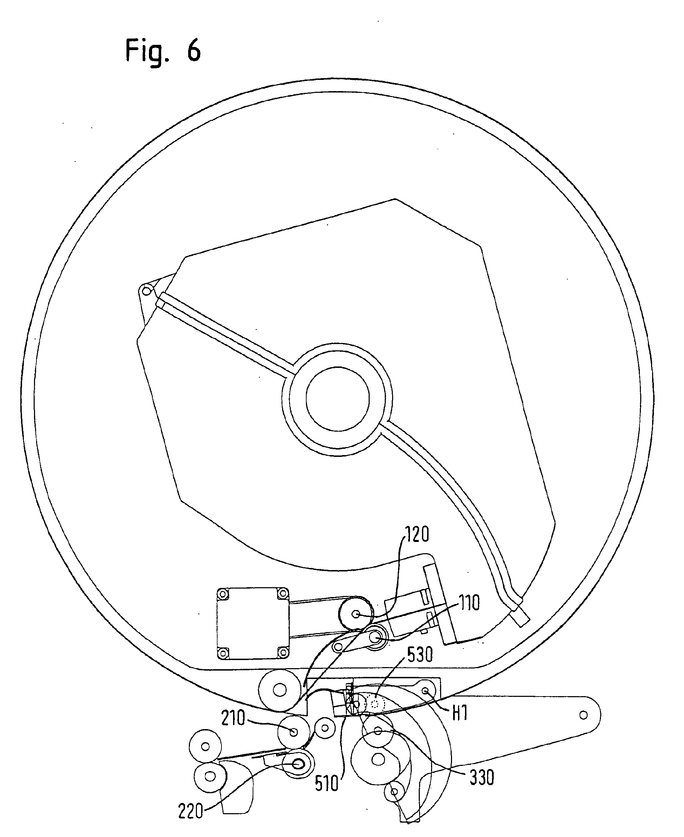

In Fig. 6 ist immer noch die zweite gekoppelte Stellung gegeben. Jedoch wurde das Mediumband von den Rollen 210, 220 zurück transportiert, bis das Vorderende des Mediumbandes zwischen der Transportrolle 330 und der Gegenrolle 530 liegt. Jedenfalls wurde das Band so weit zurück transportiert, dass es bei einem Öffnen des ersten Haltemechanismus dem ersten Haltemechanismus zum Festhalten zugeführt werden kann. Es wurde also über das um die Achse H1 heraus schwenkbare Klemm- und Schneidteil 510 hinweg transportiert.

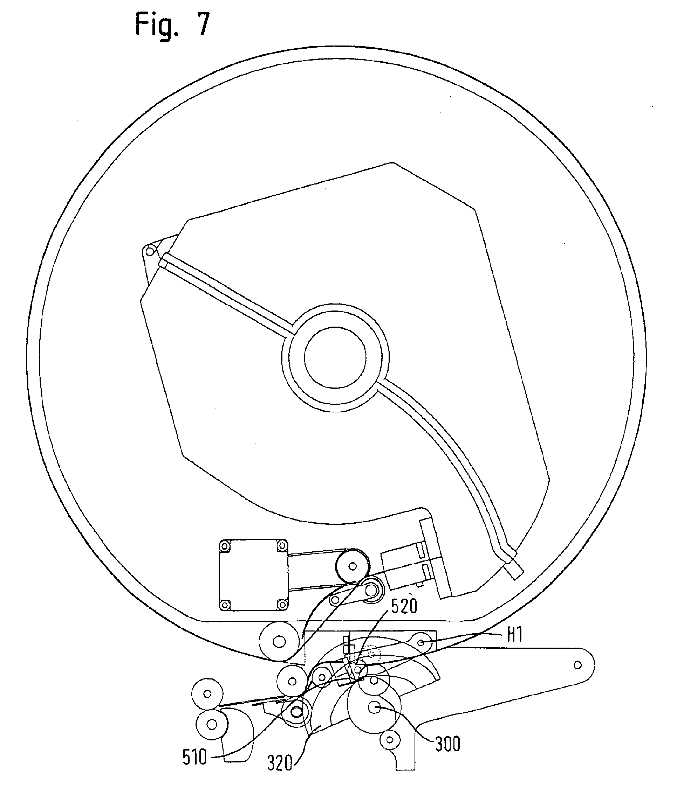

Fig. 7 zeigt die dritte gekoppelte Stellung, bei der mittels der Kurvenscheibe 320 eine Kraft auf die Rolle 520 ausgeübt wird, um das Klemm- und Schneidteil 510 um die Achse H1 aus der kreisförmigen Spannoberfläche heraus zu schwenken. Dies kann frei geschehen, ohne das Mediumband zu beeinträchtigen, da dieses, wie im Zusammenhang mit Fig. 6 beschrieben wurde, über das Klemm- und Schneidteil hinweg zurück transportiert wurde. Der in Fig. 7 gezeigte erste Haltemechanismus befindet sich in seiner offenen Stellung (zweite Ladestellung), in der ihm zum Klemmen und Durchtrennen das Mediumband zuführbar ist. Die Spanntrommel ist in der gleichen Drehstellung, wie in den Fig. 4 bis 6.

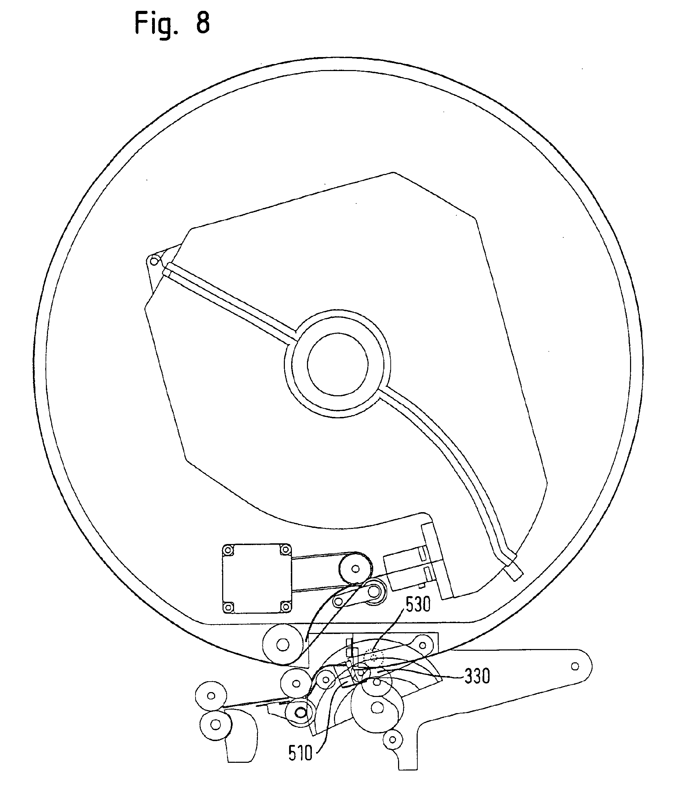

Auch in Fig. 8 ist die Spanntrommel noch in der gleichen Drehstellung wie in Fig. 4 bis 7, dort ist jedoch das Mediumband mittels der Transportrolle 330 und der Gegenrolle 530 in den Erfassungsbereich des Klemm- und Schneidteils 510 vorwärts, in Abgaberichtung transportiert worden.

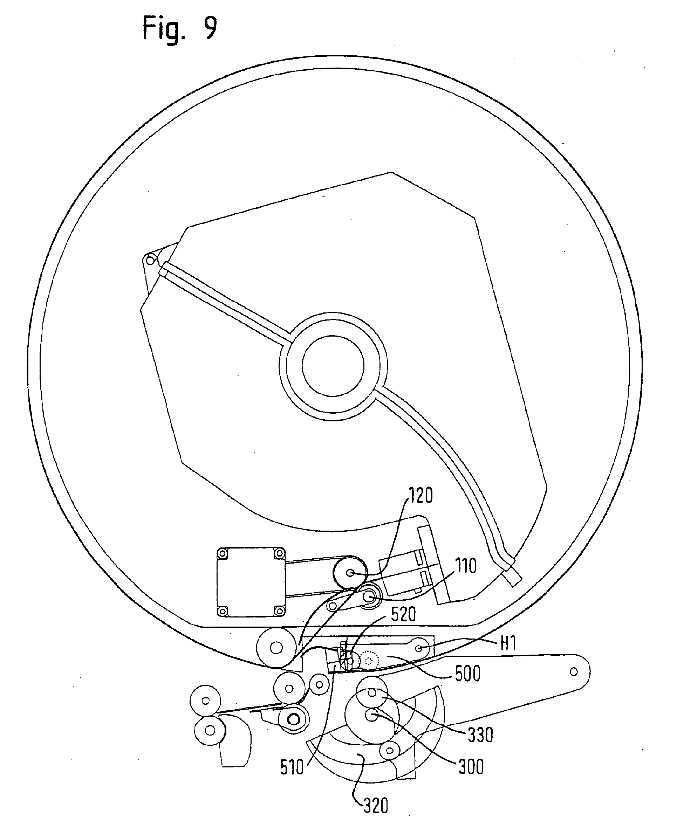

In der in Fig. 9 gezeigten Stellung ist die Drehstellung der Spanntrommel immer noch dieselbe, wie in den Fig. 4 bis 8. Jedoch ist die dritte gekoppelte Stellung gegeben, bei der das Klemm- und Schneidteil 510 um die Achse H1 wieder (durch Wirkung einer nicht gezeigten Feder) in Richtung auf die Spanntrommel geschwenkt ist und das sich im Erfassungsbereich des Klemm- und Schneidteils befindliche Vorderende des Mediumbandes festklemmt. Das Zurückschwenken um die Achse H1 wird durch die nicht gezeigte Feder (elastisches Element) bewirkt, nachdem die Rolle 520 von der großen Kurvenscheibe 320 freigegeben wurde. Die kleine Kurvenscheibe 310 drückt wiederum gegen das Führungskugellager 150, so dass die Transportrolle 330 von dem Mediumband abgehoben wird.

In der in Fig. 9 gezeigten Stellung kann somit durch Rücktransport mittels der Rollen 110 und 120 das Mediumband entlang der Spannstrecke gespannt werden. In der in Fig. 9 gezeigten Stellung ist das Mediumband bereit zum Aufzeichnen und der Beladevorgang ist abgeschlossen.

Die in Fig. 9 gezeigte Stellung ist auch der Ausgangspunkt für das Entladen eines beschriebenen Mediumbandes, nachdem zum Beschreiben eine Anzahl vollständiger Drehungen der Spanntrommel durchgeführt wurde. Anders ausgedrückt, nach dem Beschreiben befindet sich die Spanntrommel wiederum in der in Fig. 9 gezeigten Stellung. Es handelt sich hierbei um die erste gekoppelte Stellung.

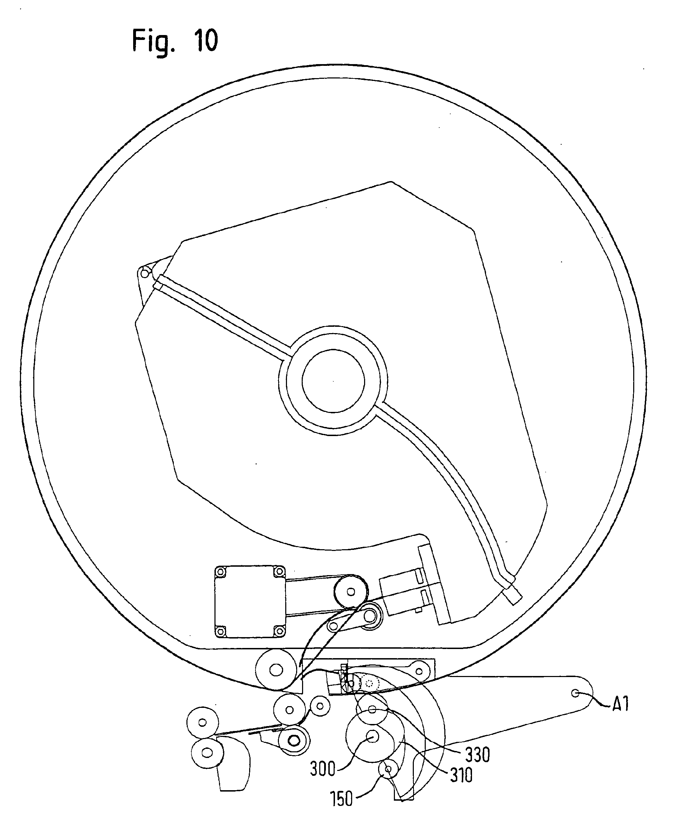

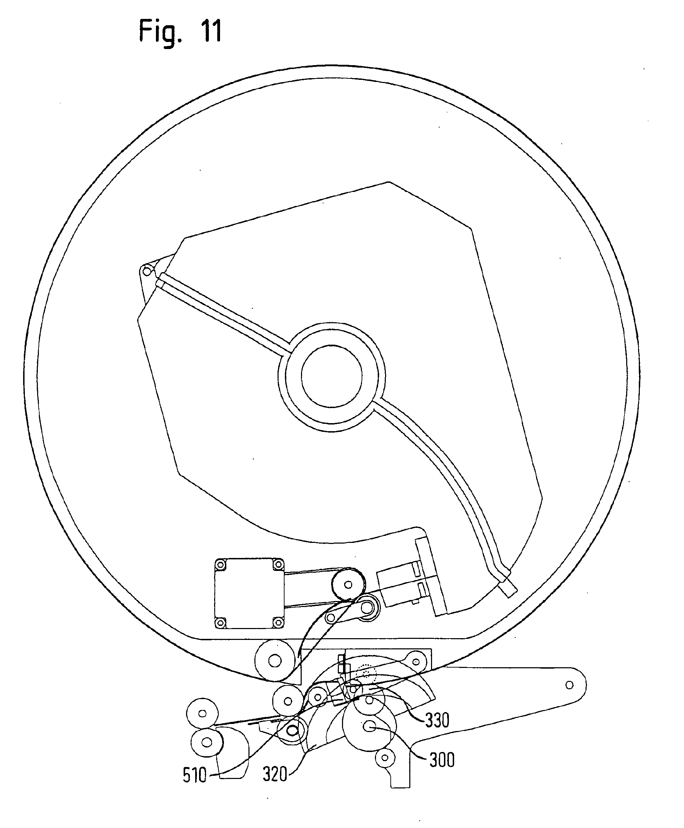

Im Zusammenhang mit den Fig. 10 bis 17 wird nun der Entladevorgang beschrieben.

Wie in Fig. 10 gezeigt ist, wird die Transportrolle 330 und der erste Haltemechanismus in die zweite gekoppelte Stellung gebracht. Die Kurvenscheibe 310 wird also wiederum um 90° entgegen dem Uhrzeigersinn gedreht, so dass die Transportrolle 330 mit dem Mediumband in Kontakt gebracht wird.

Danach wird die dritte gekoppelte Stellung eingenommen, bei der das Klemm- und Schneidteil 510 in die zweite Ladestellung bewegt ist, also das Mediumband zum Transport durch die Transportrolle 330 freigegeben wird.

Das Mediumband wird zwischen dem Klemm- und Schneidteil 510 und der Spanntrommel 100 mittels der Transportrolle 330 hindurch geführt und gelangt dann über die Führung 240 und 540 zu den Rollen 210 und 220. Die Führung 540 ist so mit dem ersten Haltemechanismus verbunden, dass sie beim Herausklappen des Klemm- und Schneidteils (zweite Ladestellung) eine Führungshilfe für das Mediumband zu den Rollen 210 und 220 bildet, die aus dem Kreisumfang bogenförmig hervorsteht, um so einen stetigen Transport des Mediumbandes von der Oberfläche der Spanntrommel weg zu gewährleisten. Beim Versenken des Klemm- und Schneidteils in der ersten Ladestellung wird die Führung 540 ebenfalls mit versenkt, so dass sie beim Beladen des Mediumbandes nicht hinderlich ist.

Das Mediumband wird von den Rollen 210 und 220 durch Drehen der Rolle 210, das von der Steuerung 400 veranlasst wird, zu den Rollen 410 und 420 gefördert. Dabei dienen die Führungen 232 und 230 einem direkten bzw. geradlinigen Transport zu den Rollen 410 und 420.

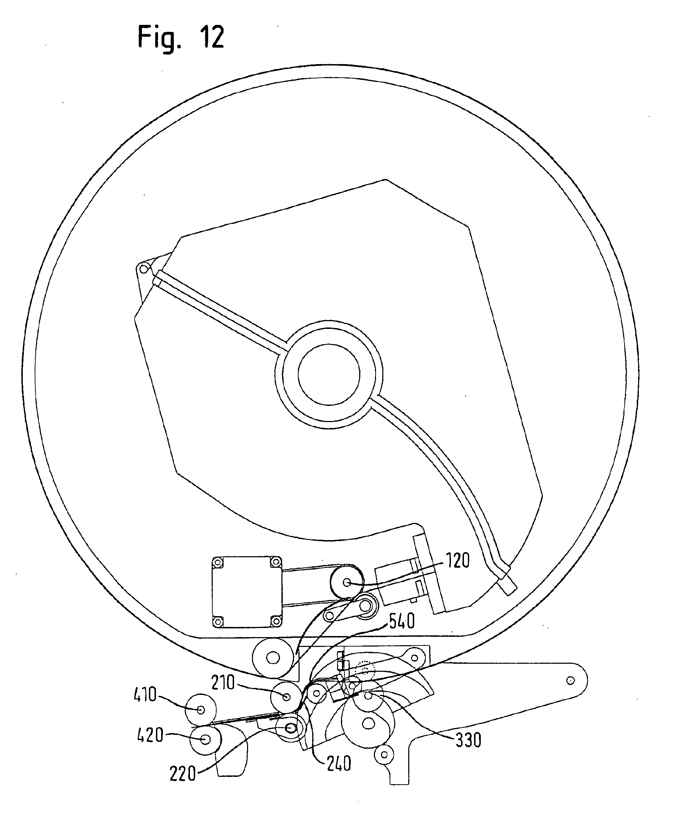

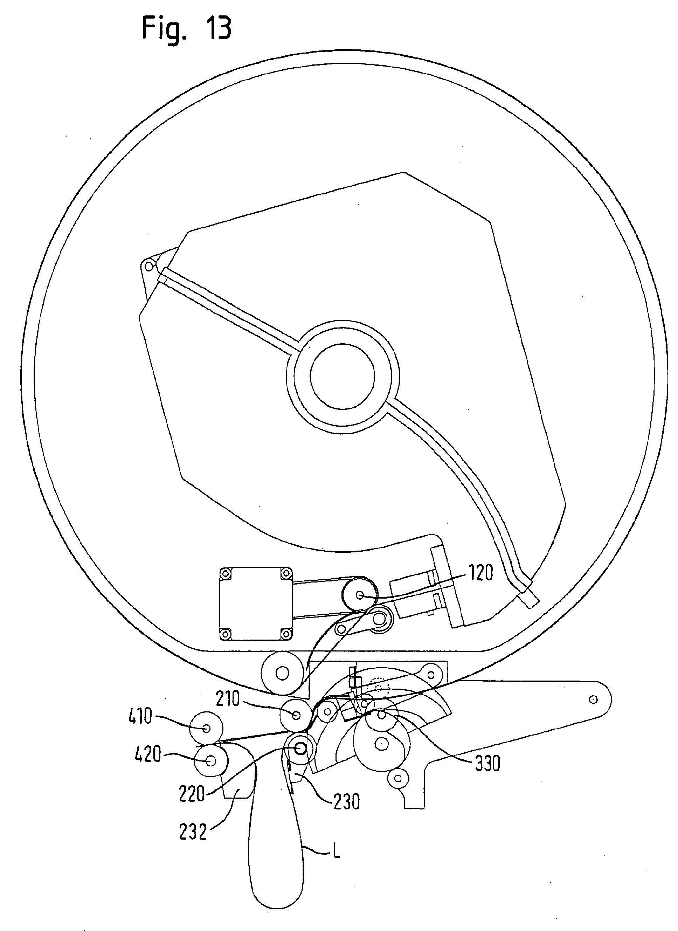

Wie bereits oben erwähnt wurde, ist die Führung 230 durch Betätigung der Steuereinrichtung schwenkbar, so dass sich die in Fig. 13 gezeigte Schlaufe L des Mediumbandes bilden kann, wenn das Vorderende des Mediumbandes durch die Rollen 410 und 420 gehalten wird, während das Mediumband durch die Rollen 210 und 220 weiter transportiert wird. Ein dem Führungsteil 230 gegenüber liegendes Formteil 232 unterstützt vorzugsweise die Schlaufenbildung, indem es ähnlich wie das geschwenkte Führungsteil 230 eine in Schwerkraftrichtung nach unten gekrümmte Auflagefläche für die Schlaufe L bietet. Während das Mediumband bei dem in den Fig. 12 und 13 gezeigten Vorgang entladen wird, wird frisches, noch nicht beschriebenes Mediumband von der internen Rolle 120 aus der Kassette K heraus transportiert und mit Hilfe der Transportrolle 330 entlang der Oberfläche der Spanntrommel 100 weiter gefördert bis ein nicht mit Bildern versehener Teil des Mediumbandes das Klemm- und Schneidteil 510 erreicht hat.

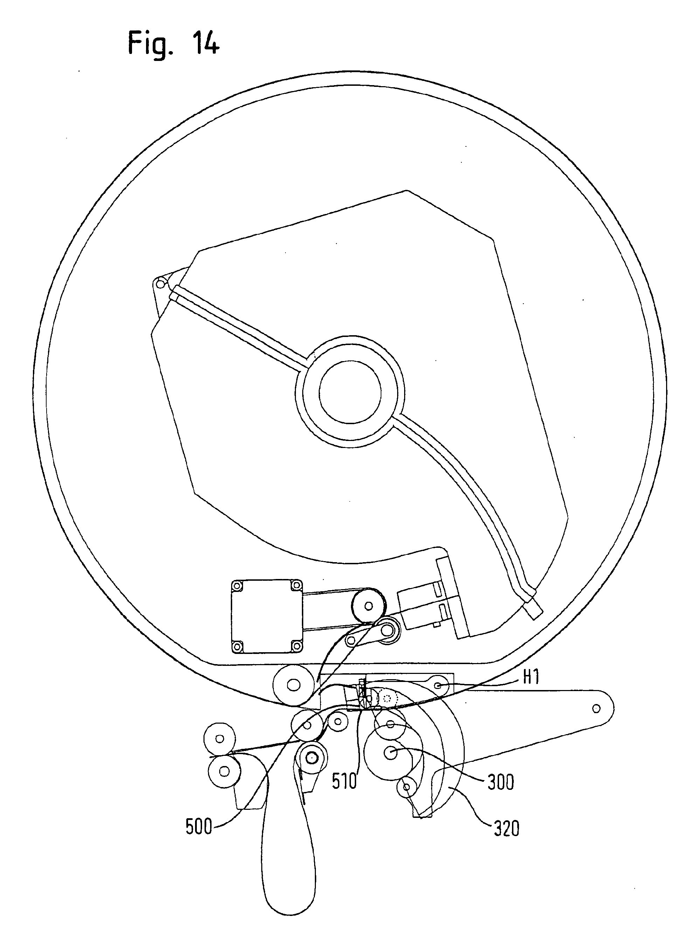

Wie in Fig. 14 gezeigt ist, wird dann der Kopplungsmechanismus in die zweite gekoppelte Stellung gebracht. Dazu wird die Kurvenwelle 300 um 90° im Uhrzeigersinn gedreht. Dadurch wird das Klemm- und Schneidteil 510 um die Achse H1 in Richtung zur Spanntrommel geschwenkt. Dadurch wird das Mediumband durchschnitten und der beschriebene Abschnitt des Mediumbandes von dem noch nicht beschriebenen Abschnitt getrennt.

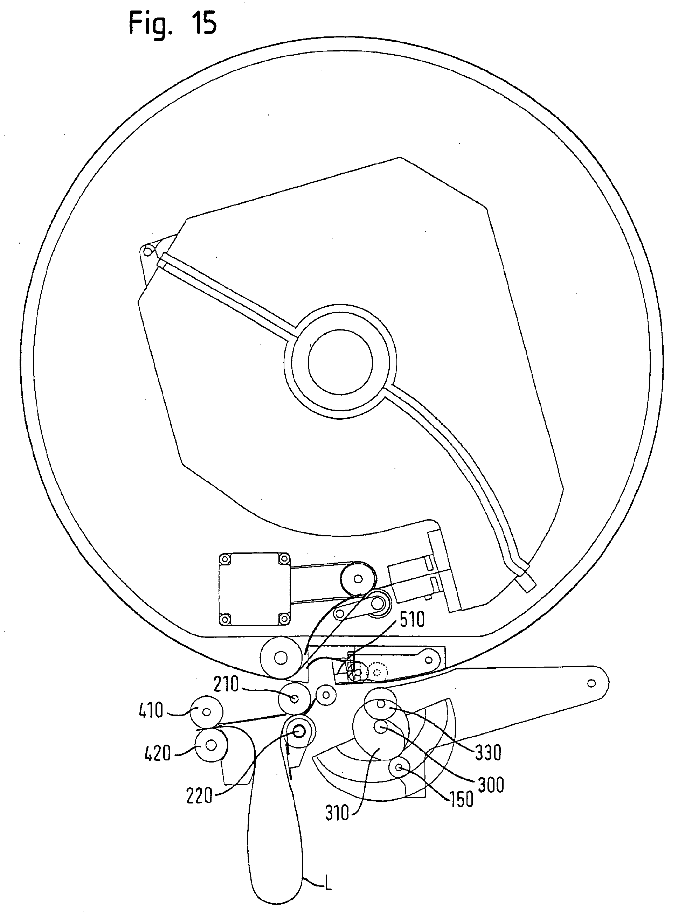

In Fig. 15 nimmt die Transportrolle 330 und das Klemm- und Schneidteil 510 wieder die erste gekoppelte Stellung ein, in der sie außer Kontakt sind und das Klemm- und Schneidteil 510 eingeklappt ist, so dass die Spanntrommel 100 frei beweglich ist. Die Schlaufe L ist noch zwischen den Rollen 210, 220 und 410, 420 ausgebildet.

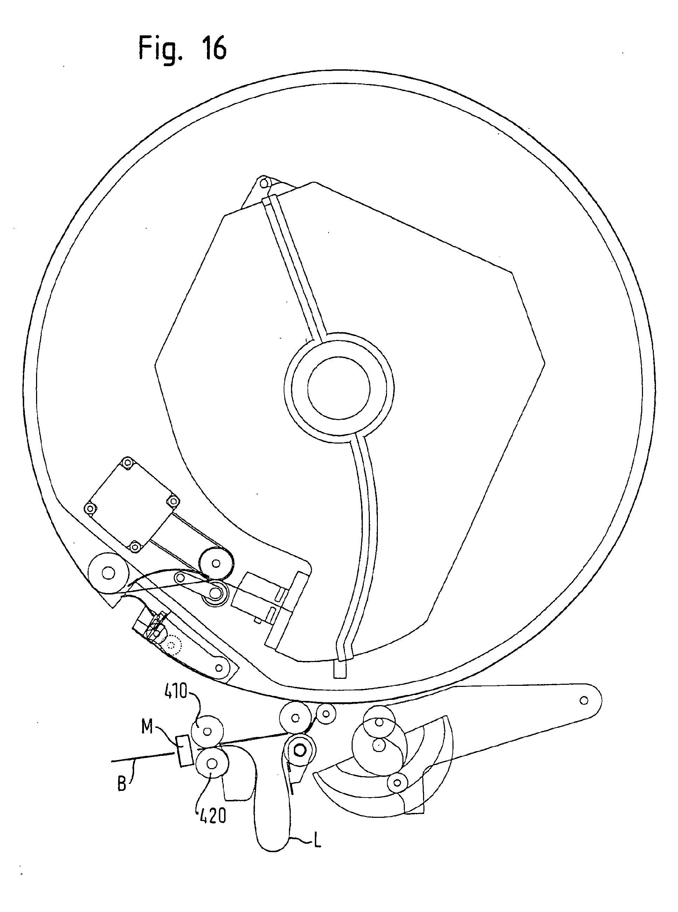

In Fig. 16 verlässt nun die Spanntrommel die Drehstellung, die sie in den Fig. 4 bis 15 eingenommen hatte. Während die Spanntrommel zum Aufzeichnen neuer Bilder gedreht wird, wird das bereits beschriebene Mediumband weiter verarbeitet, indem die Schlaufe L von den Rollen 410 und 420 weiter transportiert wird und durch die zweite Schneidvorrichtung M durchtrennt wird, um die aufgezeichneten Bilder B zu vereinzeln.

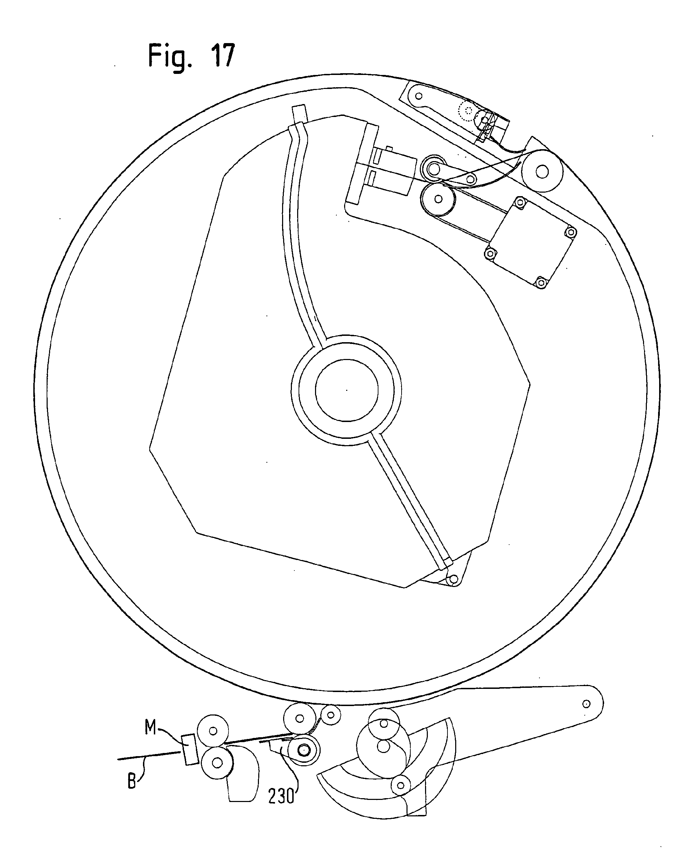

Nachdem die Mediumschlaufe L abgearbeitet wurde, indem das Mediumband zwischen die Rollen 410 und 420 zu der zweiten Schneidvorrichtung M transportiert wurde, wird die Führung 230 wieder in die Ausgangsstellung geschwenkt, wie dies in Fig. 17 gezeigt ist.

Durch das parallele Vereinzeln der aufgezeichneten Bilder und Aufzeichnen neuer Bilder kann ein hoher Durchsatz erzielt werden.

## Patentansprüche

1. Fotografische Aufzeichnungsvorrichtung zum Aufzeichnen fotografischer Bilder auf einem Mediumband,
mit einer Mediumquelle (K), die ein Mediumband (P) abgibt,
mit einer Spannanordnung (100), die eine Spannstrecke vorgibt, an deren Streckenanfang ein von der Mediumquelle abgegebenes Mediumband zuführbar ist, entlang der ein Mediumband führbar und spannbar ist, und an deren Streckenende ein geführtes Mediumband durch einen ersten Haltemechanismus (500) zum Spannen festgehalten werden kann,
mit mindestens einem Aufzeichnungsapparat (1200), um die Bilder auf einem gespannten Mediumband aufzuzeichnen, und
**gekennzeichnet durch** einen zweiten Haltemechanismus (210,220), der ein Mediumband festhalten kann und relativ zu dem die Spannanordnung (100) bewegbar ist,
einen Transportmechanismus (330), der ausgebildet ist, um ein Mediumband zwischen dem ersten und zweiten Haltemechanismus zu transportieren, wenn der erste Haltemechanismus **durch** Bewegung der Spannanordnung relativ zum zweiten Haltemechanismus eine erste vorgegebene Stellung bezüglich dem zweiten Haltemechanismus einnimmt, und
eine Steuerung (300, 310, 320, 150,400), die zu einem Übergeben des Mediumbandes derartig ausgebildet ist, dass sie einen der beiden Haltemechanismen betätigt, um ein gehaltenes Mediumband freizugeben, und, in der ersten vorgegebenen Stellung, den Transportmechanismus betätigt, um das freigegebene Mediumband zu dem anderen der beiden Haltemechanismen zu transportieren.

2. Fotografische Aufzeichnungsvorrichtung nach Anspruch 1, **dadurch gekennzeichnet, dass** die Spannanordnung relativ zu dem Transportmechanismus bewegbar ist und der Transportmechanismus mit dem entlang der Spannstrecke geführten Mediumband in und außer Kontakt bringbar ist.

3. Fotografische Aufzeichnungsvorrichtung nach Anspruch 1 oder 2, **dadurch gekennzeichnet, dass**
die relative Bewegung der Spannanordnung (100) eine Drehbewegung um eine Achse ist, wobei der Transportmechanismus und der zweite Haltemechanismus stationär sind;
die Spannstrecke so um die Achse herum verläuft, dass sich eine Streckenöffnung zwischen dem Streckenanfang und dem Streckenende ergibt, durch den ein von der Mediumquelle abgegebenes Mediumband förderbar ist;
und die Spannanordnung einen internen Mediumförderer (110,120) aufweist, der ein abgegebenes Mediumband, wenn der Mediumförderer eine zweite vorgegebene Stellung bezüglich des zweiten Haltemechanismus durch Drehung der Spannanordnung einnimmt, zu dem zweiten Haltemechanismus transportieren kann.

4. Fotografische Aufzeichnungsvorrichtung nach Anspruch 3, **dadurch gekennzeichnet, dass** die Steuerung zum automatischen Beladen der Spannanordnung mit dem Mediumband derartig ausgebildet ist, dass sie
den internen Mediumförderer betätigt, um das Mediumband in der zweiten vorgegebenen Stellung zum zweiten Haltemechanismus durch die Streckenöffnung hindurch zu fördern;
den zweite Haltemechanismus betätigt, um das geförderte Mediumband festzuhalten;
die Spannanordnung veranlasst eine Drehbewegung durchzuführen, um dadurch das Mediumband entlang der Spannstrecke zu führen, und anzuhalten, wenn die erste vorgegebene Stellung erreicht ist;
zur Übergabe den zweiten Haltemechanismen betätigt, um ein gehaltenes Mediumband freizugeben;
falls die Spannanordnung in der ersten vorgegebenen Stellung ist, zur Übergabe den Transportmechanismus betätigt, um das freigegebene Mediumband zu dem ersten Haltemechanismen zu transportieren; und
den ersten Haltemechanismus betätigt, um das übergebene Mediumband zu halten.

5. Fotografische Aufzeichnungsvorrichtung nach Anspruch 4, **dadurch gekennzeichnet, dass** die Steuerung derartig ausgebildet ist, dass sie den internen Mediumförderer betätigt, um das Mediumband entgegen der Abgaberichtung zu fördern, wenn der erste Haltemechanismus das übergebene Mediumband hält.

6. Fotografische Aufzeichnungsvorrichtung nach Anspruch 4 oder 5, **dadurch gekennzeichnet, dass** die erste vorgegebene Stellung zumindest in etwa mit der zweiten vorgegebenen Stellung übereinstimmt, so dass die Spannanordnung zum Beladen in etwa eine volle Drehung oder etwas mehr als eine volle Drehung durchführt, um von der zweiten vorgegebenen Stellung in die erste vorgegebene Stellung zu gelangen, und das Mediumband vor der Übergabe von dem zweiten zum ersten Haltemechanismus am ersten Haltemechanismus vorbeigeführt wird, der sich am Streckende befindet.

7. Fotografische Aufzeichnungsvorrichtung nach Anspruch 1 bis 6, **dadurch gekennzeichnet, dass** der erste Haltemechanismus eine erste Schneidvorrichtung aufweist, um das Mediumband zu durchtrennen;
der zweite Haltemechanismus auch zum Fördern des Mediumbandes ausgebildet ist; und
die Steuerung zum Entladen der Spannanordnung derartig ausgebildet ist, dass sie die Übergabe des Mediumbandes von dem ersten Haltemechanismus zum zweiten Haltemechanismus durchführt, den zweiten Haltemechanismus zum Fördern des Mediumbandes in Abgaberichtung über eine vorgegebene Länge veranlasst, und die erste Schneidvorrichtung zum Durchtrennen des über die vorgegebene Länge geförderten Mediumbandes veranlasst.

8. Fotografische Aufzeichnungsvorrichtung nach Anspruch 7, **dadurch gekennzeichnet, dass** in Abgaberichtung nach dem zweiten Haltemechanismus ein dritter Haltemechanismus (410,420) vorgesehen ist, nach dem wiederum eine zweite Schneidvorrichtung (M) angeordnet ist, um das durchtrennte Mediumband in Unterabschnitte aufzuteilen, die jeweils ein Bild enthalten, wobei die Steuerung derartig ausgebildet ist, dass sie den dritten Haltemechanismus erst dann zum Freigeben eines gehaltenen Mediumbandes betätigt, um es zur zweiten Schneidvorrichtung zu transportieren, wenn die erste Schneidvorrichtung das Mediumband durchtrennt hat.

9. Fotografische Aufzeichnungsvorrichtung nach Anspruch 8, **dadurch gekennzeichnet, dass** der zweite und dritte Haltemechanismus derart beabstandet sind, dass sich eine Schleife des Mediumbandes dazwischen bildet, bevor der dritte Haltemechanismus freigegeben wird.

10. Fotografische Aufzeichnungsvorrichtung nach Anspruch 1 bis 9, **dadurch gekennzeichnet, dass** der erste Haltemechanismus durch die Steuerung relativ zur Spannanordnung in eine erste Ladestellung bewegbar ist, in der ein von dem ersten Haltemechanismus erfasstes Mediumband von dem ersten Haltemechanismus festgehalten wird und in der ein Transport eines von dem ersten Haltemechanismus nicht erfassten Mediumbandes durch den Transportmechanismus zwischen dem ersten und zweiten Haltemechanismus ermöglicht ist.

11. Fotografische Aufzeichnungsvorrichtung nach Anspruch 10, **dadurch gekennzeichnet, dass** zum Be- und/oder Entladen der erste Haltemechanismus eine zweite Ladestellung aufweist, bei der dem ersten Haltemechanismus ein Mediumband durch den Transportmechanismus derartig zuführbar ist, dass es das zugeführte Mediumband durch Übergehen in die erste Ladestellung festhält.

12. Fotografische Aufzeichnungsvorrichtung nach Anspruch 11, **dadurch gekennzeichnet, dass**, wenn die Spannanordnung in der ersten vorgegebenen Stellung ist, der Transportmechanismus mechanisch und/oder elektrisch mit dem ersten Haltemechanismus derart gekoppelt ist, dass
in einer ersten gekoppelten Stellung der erste Haltemechanismus in der ersten Ladestellung ist und der Transportmechanismus außer Kontakt mit einem auf der Spannstrecke geführten Mediumband ist;
in einer zweiten gekoppelten Stellung der erste Haltemechanismus in der ersten Ladestellung ist und der Transportmechanismus in Kontakt mit einem auf der Spannstrecke geführten Mediumband ist; und
in einer dritten gekoppelten Stellung, der erste Haltemechanismus in der zweiten Ladestellung ist und die Transportrolle in Kontakt mit einem auf der Spannstrecke geführten Mediumband ist.

13. Fotografische Aufzeichnungsvorrichtung nach Anspruch 12, **dadurch gekennzeichnet, dass** die Steuerung den Transportmechanismus und ersten Haltemechanismus zum Beladen und/oder Entladen der Spannanordnung derartig steuert, dass sie zuerst die erste gekoppelte Stellung, dann die zweite gekoppelte Stellung und schließlich die dritte gekoppelte Stellung einnehmen.

14. Verfahren zum automatischen Beladen einer fotografischen Aufzeichnungsvorrichtung nach Anspruch 4 -6, mit folgenden Schritten:
der interne Mediumförderer wird betätigt, um das Mediumband in der zweiten vorgegebenen Stellung zum zweiten Haltemechanismus durch die Streckenöffnung hindurch zu fördern,
der zweite Haltemechanismus wird betätigt, um das geförderte Mediumband festzuhalten,
die Spannanordnung wird veranlasst eine Drehbewegung durchzuführen, um dadurch das Mediumband entlang der Spannstrecke zu führen, und um anzuhalten, wenn die erste vorgegebene Stellung erreicht ist,
das Mediumband wird von dem zweiten Haltemechanismus zum ersten Haltemechanismus transportiert, und
der erste Haltemechanismus wird betätigt, um das in den Erfassungsbereich der ersten Halteeinrichtung transportierte Mediumband zu halten.
